# EUROPEAN PATENT APPLICATION

(11) **EP 4 535 109 A1**
(43) Date of publication of application: **09.04.2025**
(21) Application number: 22948507.3
(22) Date of filing: 30.06.2022
(51) Int. Cl.: G05B 23/02

(54) **DIAGNOSTIC METHOD AND APPARATUS**

(71) Applicant: Shenzhen Yinwang Intelligent Technologies Co., Ltd., Shenzhen, Guangdong 518129 (CN)
(72) Inventor: ZHONG, Steven Yin, Shenzhen, Guangdong 518129 (CN); XIE, Yujuan, Shenzhen, Guangdong 518129 (CN); ZHANG, Zuoqiang, Shenzhen, Guangdong 518129 (CN); WEI, Zhuo, Shenzhen, Guangdong 518129 (CN); FU, Tianfu, Shenzhen, Guangdong 518129 (CN)
(74) Representative: Gill Jennings & Every LLP
(86) International application number: PCT/CN2022/102811
(87) International publication number: WO 2024/000402

(57) **Abstract**

Embodiments of this application provide a diagnosis method and apparatus. The method includes: receiving a first diagnosis policy file sent by a diagnosis device, where the diagnosis policy file includes access control policy information, and the diagnosis device includes a remote diagnosis platform or a local diagnosis instrument; verifying authenticity and integrity of the first diagnosis policy file; and when the verification on the authenticity and integrity of the first diagnosis policy file succeeds, verifying, based on the access control policy information, whether a diagnosis command has an access control permission. According to the foregoing method, a vehicle can be prevented from executing an incorrect or unauthorized diagnosis command during diagnosis, and property and privacy security of a vehicle owner can be ensured.

## Description

### TECHNICAL FIELD

Embodiments of this application relate to the security field, and more specifically, to a diagnosis method and apparatus.

### BACKGROUND

With evolution of network technologies and popularization of vehicles, vehicle diagnosis can bring many conveniences to vehicle users. Vehicle diagnosis is to determine a cause of a vehicle fault, that is, to determine a technical status of a vehicle and find out a fault part and a fault cause without disassembling the vehicle. A diagnosis scope may include power, a chassis, a vehicle body, and accessories, and may include exhaust emission, noise, and security detection of the vehicle.

However, in a vehicle diagnosis process, because a diagnosis platform or a diagnosis instrument needs to send a diagnosis command to the vehicle, once the diagnosis platform or the diagnosis instrument is abused or maliciously diagnosed by an unauthorized person to deliver an incorrect diagnosis command or a malicious diagnosis command, after the vehicle executes the incorrect or unauthorized diagnosis command, privacy security, property security, and life safety of a user may be violated.

### SUMMARY

Embodiments of this application provide a diagnosis method and apparatus, to prevent a vehicle from executing an incorrect or unauthorized diagnosis command during diagnosis, and ensure property and privacy security of a vehicle owner.

According to a first aspect, a diagnosis method is provided. The method includes: receiving a first diagnosis policy file sent by a diagnosis device, where the first diagnosis policy file includes access control policy information, and the diagnosis device includes a remote diagnosis platform or a local diagnosis instrument; verifying authenticity and integrity of the first diagnosis policy file; and when verification on the authenticity and integrity of the first diagnosis policy file succeeds, verifying, based on the access control policy information, whether a diagnosis command has an access control permission.

The diagnosis command may be a diagnosis command to be executed by a vehicle, and the diagnosis command may be sent by the diagnosis device. The diagnosis command may include but is not limited to: trouble code reading, trouble code clearing, entire vehicle scanning, and component diagnosing. The access control policy information may include one or more of an authorization type, a validity period, vehicle identity information, an identifier ID, a timestamp, a version, a signature, and a certificate. That the diagnosis command has the access control permission may be understood as that the diagnosis command is authorized and valid, and the diagnosis command may be executed by the vehicle.

In embodiments of this application, before executing the diagnosis command, the vehicle can verify, based on the access control policy information in the first diagnosis policy file, whether the diagnosis command has the access control permission. The diagnosis command is executed only when the diagnosis command has the access control permission. In this way, the vehicle can be prevented from executing an incorrect or unauthorized diagnosis command, and property and privacy security of a user can be ensured.

With reference to the first aspect, in some implementations of the first aspect, the access control policy information includes a validity period. The verifying, based on the access control policy information, whether a diagnosis command has an access control permission includes: within the validity period, verifying, based on the access control policy information, whether the diagnosis command has the access control permission.

In embodiments of this application, only when the diagnosis policy file is within a validity period, whether the diagnosis command has the access control permission is verified by using the access control policy information in the diagnosis policy file. In this way, the diagnosis policy file can be prevented from being still used after being invalid. This improves security of using the diagnosis policy file.

With reference to the first aspect, in some implementations of the first aspect, the access control policy information further includes first vehicle identity information. The verifying, based on the access control policy information, whether a diagnosis command has an access control permission includes: verifying whether the first vehicle identity information is consistent with second vehicle identity information, where the diagnosis command includes the second vehicle identity information.

The first vehicle identity information may be information indicating a vehicle identity, and may include but is not limited to a vehicle identification number. When the first vehicle identity information in the access control policy information is consistent with the diagnosis command, it may be determined that the diagnosis command has the access control permission.

In embodiments of this application, whether the first vehicle identity information is consistent with the second vehicle identity information is verified to verify whether the diagnosis command has the access control permission. This can further ensure property security and privacy security of the user.

With reference to the first aspect, in some implementations of the first aspect, the first vehicle identity information and/or the second vehicle identity information are/is a vehicle identification number.

With reference to the first aspect, in some implementations of the first aspect, the access control policy information further includes a first identifier ID. The first identifier ID includes at least one of a first electronic control unit ID, a first CAN ID, a first diagnosis service ID, and a first diagnosis data ID. The verifying, based on the access control policy information, whether a diagnosis command has an access control permission includes: verifying whether the first identifier ID is consistent with a second identifier ID, where the second identifier ID is an identifier ID in the diagnosis command, and the second identifier ID includes at least one of a second electronic control unit ID, a second CAN ID, a second diagnosis service ID, and a second diagnosis data ID.

When the first identifier ID is consistent with the second identifier ID, the diagnosis command can take effect for a corresponding electronic control unit, or the vehicle can use a corresponding diagnosis service or corresponding diagnosis data.

The second electronic control unit ID may be an ID of the electronic control unit corresponding to the diagnosis command, the second CAN ID may indicate an address or a name of a CAN node that sends and receives the diagnosis command, the second diagnosis service ID may be a service ID required for executing the diagnosis command, and the second diagnosis data ID may be a data ID required for executing a diagnosis service or the diagnosis command.

In embodiments of this application, when the first identifier ID in the diagnosis command is consistent with the second identifier ID in the access control policy information, the diagnosis command can take effect for the corresponding electronic control unit, or the vehicle can use the corresponding diagnosis service or diagnosis data. In this way, not only a diagnosis access control mechanism oriented to the vehicle and the component is provided, but also an access mechanism oriented to the diagnosis service is provided. This ensures security and effectiveness of the diagnosis command.

With reference to the first aspect, in some implementations of the first aspect, the access control policy information further includes a first timestamp. The verifying, based on the access control policy information, whether a diagnosis command has an access control permission includes:
verifying whether a second timestamp is greater than the first timestamp, where the second timestamp is a timestamp of the diagnosis command.

When the second timestamp is greater than the first timestamp, the diagnosis command has the access control permission. When the second timestamp is smaller than the first timestamp, the diagnosis command does not have the access control permission.

Optionally, in this implementation, it may be set that the diagnosis command has the access control permission when the second timestamp is greater than the first timestamp and execution time of a diagnosis task is within a validity period of the access control policy information.

It should be understood that, in this step, whether the timestamp of the diagnosis task is greater than a timestamp of the access control policy information is ensured to prevent the diagnosis task from being reused or under a replay attack, that is, it needs to be ensured that time at which the vehicle receives the diagnosis command is later than time at which the vehicle receives the diagnosis policy file.

In embodiments of this application, whether the second timestamp is greater than the first timestamp is verified to prevent the diagnosis task from being reused or under a replay attack. This can further ensure property security and privacy security of the user.

With reference to the first aspect, in some implementations of the first aspect, the diagnosis device includes the local diagnosis instrument, the first diagnosis policy file includes a first key, and the method further includes: storing the first key in the vehicle, where the vehicle is a vehicle that is to execute the diagnosis command; verifying whether the first key is consistent with a second key, where the second key is a key stored in the local diagnosis instrument; and establishing a secure access service with the local diagnosis instrument when the first key is consistent with the second key.

The secure access service can be established between the vehicle and the local diagnosis instrument only when the first key is consistent with the second key. After the secure access service is established, the local diagnosis instrument can verify, based on the access control policy information in the diagnosis policy file, whether the diagnosis command has the diagnosis control permission.

Both the first key and the second key may be temporary keys. An application process of the first key and the second key may be as follows: First, a key management system generates the second key, and sends the second key to an authorization management system; the authorization management system sends the second key with the first diagnosis policy file to the local diagnosis instrument after generating the first diagnosis policy file; and the local diagnosis instrument may store the second key in the local diagnosis instrument after obtaining the second key. Then, the local diagnosis instrument delivers the first key with the first diagnosis policy file to the vehicle, and the vehicle stores the first key. During key verification, if the first key is consistent with the second key, that is, the first key is the second key, it indicates that the second key is not tampered with by the local diagnosis instrument in a transfer process. If the first key is inconsistent with the second key, it indicates that the second key may be tampered with, and a diagnosis process is insecure.

Whether the first key is consistent with the second key may alternatively be verified in a plurality of manners.

In a possible implementation, the local diagnosis instrument may send a ciphertext to the vehicle, and the vehicle verifies the ciphertext to determine whether the first key is consistent with the second key.

In a possible implementation, the local diagnosis instrument may directly send the stored second key to the vehicle after storing the first key in the vehicle through the first diagnosis policy file, and the vehicle verifies whether the first key is consistent with the second key.

It should be understood that, a reason for verifying whether the first key is consistent with the second key is to be compatible with a local diagnosis instrument of an earlier version. If a diagnostic user uses the local diagnosis instrument of the earlier version to diagnose the vehicle, execution of the diagnosis command may fail if key verification is not performed.

With reference to the first aspect, in some implementations of the first aspect, the diagnosis device includes the local diagnosis instrument, and the method further includes: receiving a first key sent by the local diagnosis instrument; storing the first key in the vehicle, where the vehicle is a vehicle that is to execute the diagnosis command; verifying whether the first key is consistent with a second key, where the second key is a key stored in the local diagnosis instrument; and establishing a secure access service with the local diagnosis instrument when the first key is consistent with the second key.

Both the first key and the second key may be temporary keys. An application process of the first key and the second key may be: First, after a key management system generates the second key, and sends the second key to the local diagnosis instrument, the local diagnosis instrument stores the second key. Then, the local diagnosis instrument directly delivers the first key to the vehicle, and the vehicle stores the first key. During key verification, if the first key is consistent with the second key, that is, the first key is the second key, it indicates that the second key is not tampered with by the local diagnosis instrument in a transfer process. If the first key is inconsistent with the second key, it indicates that the second key may be tampered with, and a diagnosis process is insecure.

In embodiments of this application, whether the first key is consistent with the second key is verified to determine whether a secure access service is established between the vehicle and the diagnosis platform. The vehicle can verify, based on the access control policy information, whether the diagnosis command has the access control permission only after the secure access service is established. In this way, security and authority of execution of the diagnosis command can be further ensured.

With reference to the first aspect, in some implementations of the first aspect, the establishing a secure access service with the local diagnosis instrument when the first key is consistent with the second key includes: establishing the secure access service with the local diagnosis instrument when the first key is consistent with the second key and the first key is within a validity period.

The validity period may be a validity period in the access control policy information, or may be a validity period of the first key. If the validity period expires, the first key is invalid.

In embodiments of this application, the vehicle can establish the secure access service with the local diagnosis instrument when the first key is consistent with the second key and the first key is within the validity period. In this way, consistency verification by using the invalid first key can be avoided, and security of using the key can be further improved.

With reference to the first aspect, in some implementations of the first aspect, the access control policy information includes a certificate and a signature, and the verifying authenticity and integrity of the first diagnosis policy file includes: decrypting the signature by using a public key of the certificate, to obtain a first digital digest; performing hash calculation on the access control policy information, to obtain a second digital digest; and verifying whether the first digital digest is consistent with the second digital digest.

Optionally, before the signature is decrypted by using the certificate, the method further includes: verifying authenticity and validity of the certificate.

Optionally, the authenticity and integrity of the first diagnosis policy file may be verified by using a symmetric key. Encryption calculation is performed on the access control policy information by using the symmetric key, to obtain the second digital digest. Whether the first digital digest is consistent with the second digital digest is verified. In a process of performing verification in this manner, the access control policy information may include the first digital digest, and the first digital digest does not need to be obtained by decrypting the signature by using the public key.

In embodiments of this application, hash calculation may be performed on the access control policy information, to obtain the second digital digest, and the second digital digest is compared with the first digital digest to verify the authenticity and integrity of the first diagnosis policy file. In this way, when verification on the authenticity and integrity of the first diagnosis policy file succeeds, whether the diagnosis command has the access control permission is verified by using the access control policy information in the first diagnosis policy file. This can further ensure property and privacy security of the user.

With reference to the first aspect, in some implementations of the first aspect, the verifying authenticity and integrity of the first diagnosis policy file includes: verifying whether first vehicle identity information matches the vehicle, where the vehicle is a vehicle that is to execute the diagnosis command.

For example, the first vehicle identification information is a vehicle identification number. A first vehicle identification number may be compared with an identification code of the vehicle to determine whether the first vehicle identification number matches the vehicle. If the first vehicle identification number is consistent with the identification code of the vehicle, verification succeeds. If the first vehicle identification number is inconsistent with the identification code of the vehicle, verification fails. The vehicle identification number may be viewed on a front partition plate of an engine compartment or an instrument console of the vehicle.

In embodiments of this application, whether the first vehicle identity information matches the vehicle is determined to verify the authenticity and integrity of the first diagnosis policy file. In this way, when verification on the authenticity and integrity of the first diagnosis policy file succeeds, whether the diagnosis command has the access control permission is verified by using the access control policy information in the first diagnosis policy file. This can further ensure property and privacy security of the user.

With reference to the first aspect, in some implementations of the first aspect, before the receiving a first diagnosis policy file sent by a diagnosis device, the method further includes: receiving a second diagnosis policy file sent by the diagnosis device, where the second diagnosis file includes a third timestamp. The verifying authenticity and integrity of the first diagnosis policy file includes:
verifying whether the first timestamp is greater than the third timestamp.

Time at which the vehicle receives the second diagnosis policy file is earlier than time at which the vehicle receives the first diagnosis policy file. The second diagnosis policy file may be a diagnosis policy file used when the diagnosis command is executed last time, or may be a diagnosis policy file that has not been used. Whether the first timestamp is greater than the third timestamp is verified to determine whether the first diagnosis policy file is reused or under a replay attack. If the first timestamp is less than the third timestamp, it indicates that the first diagnosis policy file may be reused or under the replay attack, and the policy file is not authentic. If the first time stamp is greater than the third time stamp, verification on the authenticity and integrity of the first diagnosis policy file succeeds.

In embodiments of this application, a size relationship between the first timestamp and the third timestamp is verified to determine whether the first diagnosis policy file is reused or under the replay attack. When verification succeeds, whether the diagnosis command has the access control permission is verified by using the access control policy information in the first diagnosis policy file. This can further ensure property and privacy security of the user.

With reference to the first aspect, in some implementations of the first aspect, the verifying authenticity and integrity of the first diagnosis policy file includes: determining whether a difference between the first timestamp and local time of the vehicle is less than or equal to a preset threshold.

If the difference between the first timestamp and the local time of the vehicle is less than or equal to the preset threshold, verification on the authenticity and integrity of the first diagnosis policy file succeeds. If the difference between the first timestamp and the local time of the vehicle is greater than the preset threshold, it indicates that the first diagnosis policy file may be reused or under the replay attack.

In embodiments of this application, a size relationship between the first timestamp and the local time of the vehicle is verified to determine whether the first diagnosis policy file is reused or under the replay attack. When verification succeeds, whether the diagnosis command has the access control permission is verified by using the access control policy information in the first diagnosis policy file. This can further ensure property and privacy security of the user.

With reference to the first aspect, in some implementations of the first aspect, the receiving a first diagnosis policy file sent by a diagnosis device includes: when authorization of a vehicle owner is obtained, receiving the first diagnosis policy file sent by the diagnosis device.

The vehicle owner can perform authorization with a specific valid period by using an online/offline service agreement or by making a call, to meet a privacy compliance requirement. For example, before diagnosis starts, the vehicle owner needs to sign or select a diagnosis service agreement. The vehicle can execute a diagnosis task after the vehicle detects that the vehicle owner signs or selects the diagnosis service agreement. The diagnosis service agreement may include but is not limited to a diagnosed object, diagnosis permission, a resource that needs to be invoked by the vehicle to execute the diagnosis task, and the like. For another example, before diagnosis starts, the vehicle owner may request to perform vehicle diagnosis by making a call. In this case, the vehicle owner may agree to the diagnosis service agreement by default. For another example, the vehicle owner may trigger a diagnosis procedure by using an application on the vehicle.

In embodiments of this application, the vehicle can receive the first diagnosis policy file after being authorized by the vehicle owner, subsequently verify, based on the first diagnosis policy file, whether the diagnosis command has the access control permission.

According to a second aspect, a diagnosis method is provided. The method is applied to a diagnosis device, and the diagnosis device includes a remote diagnosis platform or a local diagnosis instrument. The method includes: sending first request information to an authorization management system, where the first request information is used to request the authorization management system to generate a first diagnosis policy file, and the first diagnosis policy file is used to verify whether a diagnosis command has an access control permission; receiving the first diagnosis policy file sent by the authorization management system; and sending the first diagnosis policy file to a vehicle, where the vehicle is a vehicle that is to execute the diagnosis command.

In embodiments of this application, the diagnosis device receives the first diagnosis policy file from the authorization management system, and forwards the first diagnosis policy file to the vehicle, so that the vehicle subsequently verifies, based on the first diagnosis policy file, whether the diagnosis command has the access permission.

With reference to the second aspect, in some implementations of the second aspect, before the sending first request information to an authorization management system, the method further includes: obtaining identity information of a diagnostic person; and sending the identity information of the diagnostic person to the authorization management system. The sending first request information to an authorization management system includes: sending the first request information to the authorization management system when receiving first response information sent by the authorization management system, where the first response information indicates that identity verification of the diagnostic person succeeds.

The identity information of the diagnostic person may be expressed in a plurality of forms. For example, the identity information of the diagnostic person may be account information. The account information may be created by an original equipment manufacturer (original equipment manufacturer, OEM), an account and a password are allocated to the diagnostic person, and the diagnostic person enters the account and the password on the diagnosis platform or the diagnosis instrument. For another example, the identity information may be facial feature information of the diagnostic person. An OEM may enter facial feature information of a qualified person that performs diagnosis into the diagnosis instrument or the diagnosis platform in advance, and the diagnostic person needs to log in to the diagnosis platform or the diagnosis instrument by verifying the facial feature information. In addition, the identity information may be iris feature information, voiceprint feature information, or the like of the diagnostic person. Details are not described herein.

In embodiments of this application, the diagnostic person needs to log in to the diagnosis platform before performing diagnosis. The diagnosis device needs to send the identity information of the diagnostic person to the authorization management system, and the authorization management system performs authentication. After receiving authentication success information from the authorization management system, the diagnosis device can request the authorization management system to send the first diagnosis policy file. In this way, an identity verification mechanism of the diagnostic person is provided. This can avoid privacy security, property security, and life safety of a user from being infringed due to abuse or malicious diagnosis of the diagnosis platform or the diagnosis instrument by an unauthorized person.

With reference to the second aspect, in some implementations of the second aspect, the first diagnosis policy file includes a second key. Before the sending the first diagnosis policy file to a vehicle, the method further includes: storing the second key in the diagnosis device, where the diagnosis device is the local diagnosis instrument.

In embodiments of this application, the diagnosis device may obtain the second key from the first diagnosis policy file, and store the second key in the diagnosis device, so that the vehicle subsequently verifies consistency between a first key and the second key.

With reference to the second aspect, in some implementations of the second aspect, the method further includes: receiving a second key sent by a key management system, storing the second key in the diagnosis device, and sending a first key to the vehicle, where the vehicle is a vehicle that is to execute the diagnosis command.

According to a third aspect, a diagnosis method is provided. The method is applied to an authorization management system, and the method includes: receiving first request information sent by a diagnosis device, generating a first diagnosis policy file based on the first request information, where the first diagnosis policy file is used to verify whether a diagnosis command has an access control permission; and sending the first diagnosis policy file to the diagnosis device.

With reference to the third aspect, in some implementations of the third aspect, before the receiving first request information sent by a diagnosis device, the method further includes: receiving identity information of a diagnostic person sent by the diagnosis device; and sending first response information to the diagnosis device when the identity information of the diagnostic person is consistent with identity information preset in the authorization management system, where the first response information indicates that identity verification of the diagnostic person succeeds.

The identity information of the diagnostic person may alternatively be verified in a plurality of manners. For example, if the identity information of the diagnostic person is account information, the authorization management system needs to verify an account and a password entered by the diagnostic person, and send the first response information to the diagnosis device after verification succeeds, to notify the diagnostic person that identity verification succeeds. For another example, if the identity information of the diagnostic person is facial feature information, the authorization management system may compare the facial feature information with facial feature information preset in the system, and send first response information to the diagnosis device after verification succeeds, to notify the diagnostic person that identity verification succeeds.

In embodiments of this application, after receiving the identity information of the diagnostic person sent by the diagnosis platform, the authorization management system can verify the identity information, to identify authority of the diagnostic user, and send the first diagnosis policy file to the diagnosis device when the diagnostic user is authorized. In this way, an identity verification mechanism of the diagnostic person is provided before diagnosis. This can avoid privacy security, property security, and life safety of the user from being infringed due to abuse or malicious diagnosis of the diagnosis platform or a diagnosis instrument by an unauthorized person.

According to a fourth aspect, a diagnosis apparatus is provided. The apparatus includes: a transceiver unit, configured to receive a first diagnosis policy file sent by a diagnosis device, where the first diagnosis policy file includes access control policy information, and the diagnosis device includes a remote diagnosis platform or a local diagnosis instrument; and a processing unit, configured to verify authenticity and integrity of the first diagnosis policy file. The processing unit is further configured to: when verification on the authenticity and integrity of the first diagnosis policy file succeeds, verify, based on the access control policy information, whether a diagnosis command has an access control permission.

It should be understood that the transceiver unit provided in embodiments of this application may be a communication interface on a diagnosis module (diagnosis apparatus), and the diagnosis module may receive the first diagnosis policy file from an intelligent vehicle-mounted terminal (telematics-box, T-BOX) or another device through the interface. Alternatively, the transceiver unit may be a communication interface on a T-Box in the vehicle. The T-Box receives the first diagnosis policy file, and sends the first diagnosis policy file to a diagnosis module for processing.

With reference to the fourth aspect, in some implementations of the fourth aspect, the access control policy information includes a validity period.

The processing unit is specifically configured to: within the validity period, verify, based on the access control policy information, whether the diagnosis command has the access control permission.

With reference to the fourth aspect, in some implementations of the fourth aspect, the access control policy information further includes first vehicle identity information. The processing unit is specifically configured to verify whether the first vehicle identity information is consistent with second vehicle identity information, where the diagnosis command includes the second vehicle identity information.

With reference to the fourth aspect, in some implementations of the fourth aspect, the first vehicle identity information and/or the second vehicle identity information are/is a vehicle identification number.

With reference to the fourth aspect, in some implementations of the fourth aspect, the access control policy information further includes a first identifier ID. The first identifier ID includes at least one of a first electronic control unit ID, a first CAN ID, a first diagnosis service ID, and a first diagnosis data ID. The processing unit is specifically configured to verify whether the first identifier ID is consistent with a second identifier ID. The second identifier ID is an identifier ID in the diagnosis command, and the second identifier ID includes at least one of a second electronic control unit ID, a second CAN ID, a second diagnosis service ID, and a second diagnosis data ID.

With reference to the fourth aspect, in some implementations of the fourth aspect, the access control policy information further includes a first timestamp. The processing unit is specifically configured to verify whether a second timestamp is greater than the first timestamp. The second timestamp is a timestamp of the diagnosis command.

With reference to the fourth aspect, in some implementations of the fourth aspect, the diagnosis device includes the local diagnosis instrument, and the first diagnosis policy file includes a first key. The processing unit is further configured to store the first key in a vehicle, where the vehicle is a vehicle that is to execute the diagnosis command. The processing unit is further configured to verify whether the first key is consistent with a second key, where the second key is a key stored in the local diagnosis instrument. The processing unit is further configured to establish a secure access service with the local diagnosis instrument when the first key is consistent with the second key.

With reference to the fourth aspect, in some implementations of the fourth aspect, the diagnosis device includes the local diagnosis instrument. The transceiver unit is further configured to receive a first key sent by the local diagnosis instrument. The processing unit is further configured to store the first key in a vehicle, where the vehicle is a vehicle that is to execute the diagnosis command. The processing unit is further configured to verify whether the first key is consistent with a second key, where the second key is a key stored in the local diagnosis instrument.

The processing unit is further configured to establish a secure access service with the local diagnosis instrument when the first key is consistent with the second key.

With reference to the fourth aspect, in some implementations of the fourth aspect, the processing unit is specifically configured to establish the secure access service with the local diagnosis instrument when the first key is consistent with the second key and the first key is within a validity period.

With reference to the fourth aspect, in some implementations of the fourth aspect, the access control policy information further includes a certificate and a signature. The processing unit is specifically configured to: decrypt the signature by using a public key of the certificate, to obtain a first digital digest; perform hash calculation on the access control policy information, to obtain a second digital digest; and verify whether the first digital digest is consistent with the second digital digest.

With reference to the fourth aspect, in some implementations of the fourth aspect, the processing unit is specifically configured to verify whether the first vehicle identity information matches a vehicle, where the vehicle is a vehicle that is to execute the diagnosis command.

With reference to the fourth aspect, in some implementations of the fourth aspect, the transceiver unit is further configured to receive a second diagnosis policy file sent by the diagnosis device, where the second diagnosis file includes a third timestamp. The processing unit is specifically configured to verify whether the first timestamp is greater than the third timestamp.

With reference to the fourth aspect, in some implementations of the fourth aspect, the transceiver unit is specifically configured to: when authorization of a vehicle owner is obtained, receive the first diagnosis policy file sent by the diagnosis device.

According to a fifth aspect, a diagnosis apparatus is provided. The apparatus includes a transceiver unit, configured to send first request information to an authorization management system, where the first request information is used to request the authorization management system to generate a first diagnosis policy file, and the first diagnosis policy file is used to verify whether a diagnosis command has an access control permission. The transceiver unit is further configured to receive the first diagnosis policy file sent by the authorization management system. The transceiver unit is further configured to send the first diagnosis policy file to a vehicle, where the vehicle is a vehicle that is to execute the diagnosis command. With reference to the fifth aspect, in some implementations of the fifth aspect, the apparatus further includes an obtaining unit, configured to obtain identity information of a diagnostic person. The transceiver unit is further configured to send the identity information of the diagnostic person to the authorization management system. The transceiver unit is specifically configured to send the first request information to the authorization management system when receiving first response information sent by the authorization management system, where the first response information indicates that identity verification of the diagnostic person succeeds.

With reference to the fifth aspect, in some implementations of the fifth aspect, the first diagnosis policy file includes a second key. The apparatus further includes a processing unit, configured to store the second key in the diagnosis device.

With reference to the fifth aspect, in some implementations of the fifth aspect, the transceiver unit is further configured to receive a second key sent by a key management system. The processing unit is further configured to: store the second key in the diagnosis device, where the diagnosis device is a local diagnosis instrument; and send a first key to the vehicle.

According to a sixth aspect, a diagnosis apparatus is provided. The apparatus includes: a transceiver unit, configured to receive first request information sent by a diagnosis device; and a processing unit, configured to generate a first diagnosis policy file based on the first request information, where the first diagnosis policy file is used to verify whether a diagnosis command has an access control permission. The transceiver unit is further configured to send the first diagnosis policy file to the diagnosis device.

According to the sixth aspect, in some implementations of the sixth aspect, the transceiver unit is further configured to receive identity information of a diagnostic person sent by the diagnosis device. The transceiver unit is further configured to send first response information to the diagnosis device when the identity information of the diagnostic person is consistent with identity information preset in an authorization management system, where the first response information indicates that identity verification of the diagnostic person succeeds.

According to a seventh aspect, a diagnosis apparatus is provided. The apparatus includes at least one processor and a memory. The at least one processor is coupled to the memory, and is configured to read and execute instructions in the memory. The apparatus is configured to perform the methods according to the foregoing aspects.

According to an eighth aspect, a computer-readable medium is provided. The computer-readable medium stores program code. When the computer program code is run on a computer, the computer is enabled to perform the methods according to the foregoing aspects.

According to a ninth aspect, a chip is provided. The chip includes at least one processor and a memory. The at least one processor is coupled to the memory, and is configured to read and execute an instruction in the memory. The apparatus is configured to perform the methods according to the foregoing aspects.

According to a tenth aspect, a computer program product is provided. The computer product includes a computer program. When the computer program is run, a computer is enabled to perform the methods according to the foregoing aspects.

According to an eleventh aspect, a vehicle is provided. The vehicle includes at least one processor and a memory. The at least one processor is coupled to the memory, and is configured to read and execute instructions in the memory. The vehicle is configured to perform the method according to the first aspect.

### BRIEF DESCRIPTION OF DRAWINGS

FIG. 1(a) and FIG. 1(b) show a diagnosis system 100 according to an embodiment of this application;
FIG. 2 is a schematic functional diagram of a vehicle according to an embodiment of this application;
FIG. 3 shows a diagnosis solution according to an embodiment of this application;
FIG. 4 shows another diagnosis solution according to an embodiment of this application;
FIG. 5 shows a diagnosis method 500 according to an embodiment of this application;
FIG. 6 shows a system architecture 600 to which a diagnosis method is applicable according to an embodiment of this application;
FIG. 7 is a schematic diagram of role creation according to an embodiment of this application;
FIG. 8A to FIG. 8E show a remote diagnosis method 800 according to an embodiment of this application;
FIG. 9 shows a method 900 for generating and delivering a diagnosis policy file in a remote diagnosis process according to an embodiment of this application;
FIG. 10 shows a method 1000 for delivering and executing a diagnosis task in a remote diagnosis process according to an embodiment of this application;
FIG. 11A to FIG. 11C show a local diagnosis method 1100 according to an embodiment of this application;
FIG. 12 shows a method 1200 for generating and delivering a diagnosis policy file in a local diagnosis process according to an embodiment of this application;
FIG. 13 shows a method 1300 for delivering and executing a diagnosis task in a local diagnosis process according to an embodiment of this application;
FIG. 14 is a schematic diagram of a format of a policy file according to an embodiment of this application;
FIG. 15 is a flowchart 1500 of verifying authenticity and integrity of a policy file according to an embodiment of this application;
FIG. 16 shows a method 1600 for managing and controlling a diagnosis task or a diagnosis command by using a policy file according to an embodiment of this application;
FIG. 17 shows a specific implementation of a policy file according to an embodiment of this application;
FIG. 18 shows a diagnosis apparatus 1800 according to an embodiment of this application; and
FIG. 19 shows another diagnosis apparatus 1900 according to an embodiment of this application.

### DESCRIPTION OF EMBODIMENTS

The following describes the technical solutions in this application with reference to the accompanying drawings.

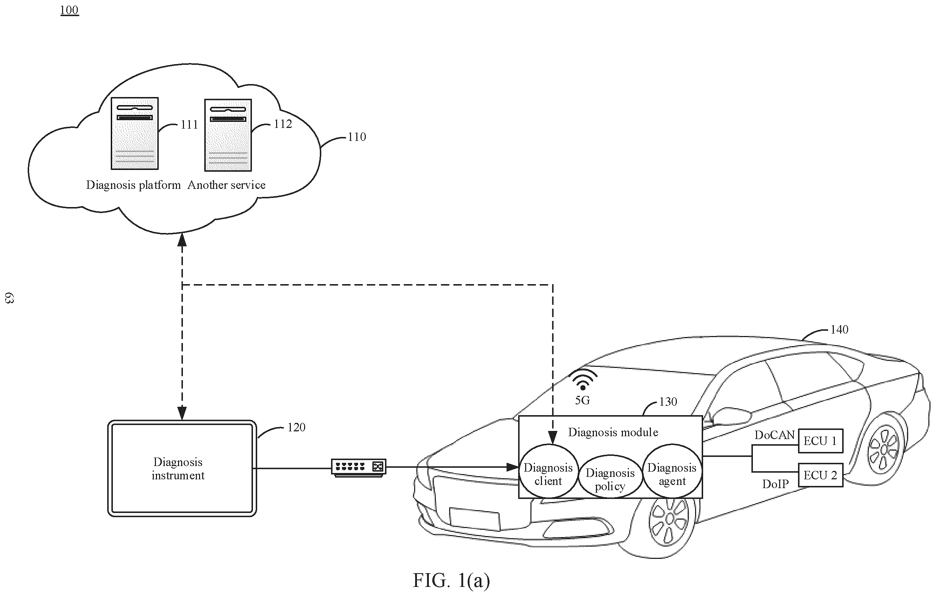

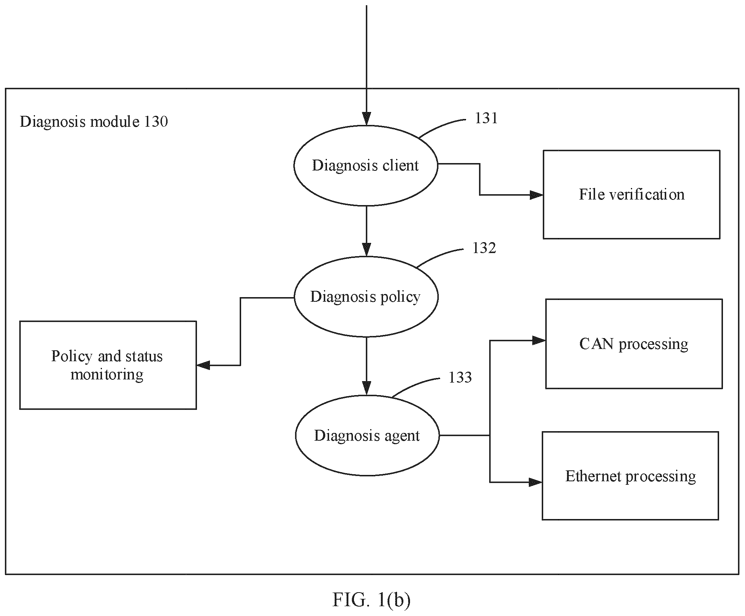

FIG. 1(a) and FIG. 1(b) show a diagnosis system 100 according to an embodiment of this application.

As shown in FIG. 1(a), the system 100 may include a cloud server 110, a diagnosis instrument 120, a diagnosis module 130, and a vehicle 140. The cloud server 110 may include a diagnosis platform 111 and another service 112. The cloud server 110 may be a physical server or a virtual server. When the cloud server 110 is a virtual server, the cloud server 110 may be located around the world, and provides services for vehicles in different countries and regions. The diagnosis platform 111 may connect to the vehicle 140 through a 4G/5G network, and directly deliver a diagnosis command to the vehicle 140 to perform vehicle diagnosis. This diagnosis manner is also referred to as remote diagnosis. The another service 112 may include: collecting and analyzing component running data of the vehicle, or providing a data value-added service, for example, a software upgrade service, for the vehicle. The diagnosis instrument 120 may synchronize information with the cloud server 110 through the 4G/5G network, and may send, by connecting to an on-board diagnostics (on-board diagnostics, OBD) interface of the vehicle, a diagnosis command to diagnose the vehicle. This diagnosis manner is also referred to as local diagnosis.

As shown in FIG. 1(b), the diagnosis module 130 is located in the vehicle 140, and the diagnosis module 130 may include a diagnosis client module 131, a diagnosis policy module 132, and a diagnosis agent module 133. The diagnosis client module 131 can receive the diagnosis command from the cloud server 110 or the diagnosis instrument 120, and verify the diagnosis command by using the diagnosis policy file. The diagnosis policy module 132 can verify the diagnosis policy file, and monitor a vehicle status. When the vehicle status meets a preset condition, the diagnosis policy module 132 can send the diagnosis command to an electronic control unit (electronic control unit, ECU) through the diagnosis agent module 133. For example, it may be set that when a traveling speed of the vehicle is less than 3 km/h, the diagnosis policy module 132 may send the diagnosis command to the diagnosis agent module 133. The diagnosis agent module 133 may forward, to the ECU through controller domain network (controller area network, CAN) processing or Ethernet processing, the diagnosis command sent by the diagnosis policy module 132.

It should be understood that, when the traveling speed of the vehicle is set to a low speed (for example, 3 km/h), the diagnosis policy module 132 sends the diagnosis command to the diagnosis agent module 133 for vehicle security consideration. Because a specific resource needs to be invoked when the vehicle executes a diagnosis task, executing the diagnosis task when the vehicle is traveling at a high speed may affect another function of the vehicle.

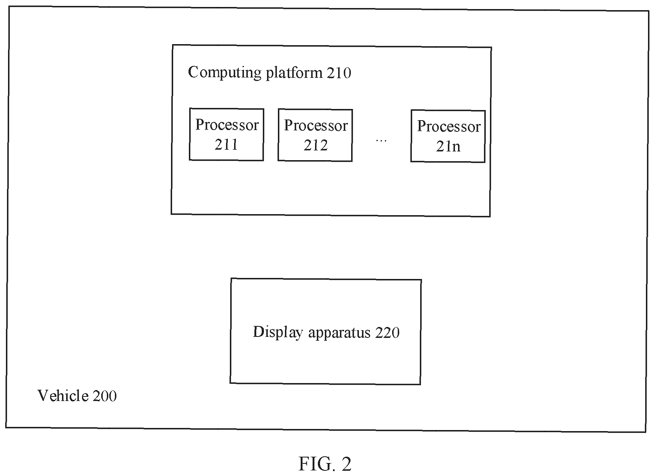

FIG. 2 is a schematic functional diagram of a vehicle according to an embodiment of this application. A vehicle 200 in FIG. 2 may be the vehicle 140 in FIG. 1(a) and FIG. 1(b). It should be understood that FIG. 2 and related descriptions are merely examples, and do not limit the vehicle in embodiments of this application.

In an implementation process, the vehicle 200 may be configured to be in a full or partial autonomous driving mode, or may be manually driven by a user.

The vehicle 200 may include a plurality of subsystems, such as a computing platform 210 and a display apparatus 220. Optionally, the vehicle 200 may include more or fewer subsystems, and each subsystem may include one or more components. In addition, all the subsystems and components of the vehicle 200 may be interconnected in a wired or wireless manner.

Some or all of functions of the vehicle 200 may be controlled by the computing platform 210. The computing platform 210 may include processors 211 to 21n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads an instruction to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 210 may further include a memory. The memory is configured to store instructions. Some or all of the processors 211 to 21n may invoke the instructions in the memory to execute instructions, to implement a corresponding function.

The computing platform 210 may control functions of the vehicle 200 based on inputs received from the subsystems. In some embodiments, the computing platform 210 may operate to control many aspects of the vehicle 200 and the subsystems of the vehicle.

Optionally, the foregoing components are only examples. In actual application, components in the foregoing modules may be added or deleted based on an actual requirement. FIG. 2 should not be understood as a limitation on embodiments of this application.

Optionally, the vehicle 200 or a sensing and computing device (for example, the computing platform 210) associated with the vehicle 200 may predict behavior of an identified object based on features of the identified object and a status of the ambient environment (for example, traffic, rain, and ice on the road). Optionally, all identified objects depend on behavior of each other. Therefore, all the identified objects may alternatively be jointly considered to predict behavior of a single identified object. The vehicle 200 can adjust a speed of the vehicle 200 based on the predicted behavior of the identified object. In other words, the autonomous driving vehicle can determine, based on the predicted behavior of the object, a specific stable state (for example, acceleration, deceleration, or stop) to which the vehicle needs to be adjusted. In this process, another factor may also be considered to determine the speed of the vehicle 200, for example, a lateral location of the vehicle 200 on a road on which the vehicle 200 travels, a curvature of the road, and proximity between a static object and a dynamic object.

In addition to providing an instruction for adjusting the speed of the autonomous driving vehicle, the computing device may further provide an instruction for modifying a steering angle of the vehicle 200, so that the autonomous driving vehicle follows a given track and/or keeps safe horizontal and vertical distances from an object near the autonomous driving vehicle (for example, a car in an adjacent lane of the road).

The vehicle 200 may be a car, a truck, a motorcycle, a public vehicle, a boat, an airplane, a helicopter, a lawn mower, a recreational vehicle, a playground vehicle, a construction device, a trolley, a golf cart, a train, or the like. This is not specifically limited in embodiments of this application.

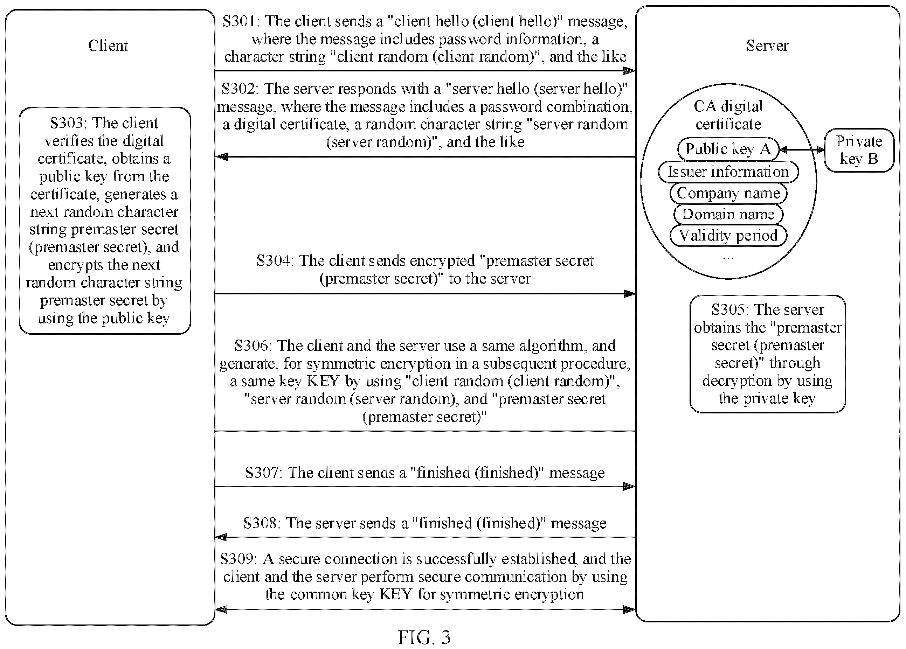

FIG. 3 shows a diagnosis solution according to an embodiment of this application. The diagnosis solution shown in FIG. 3 may be applied to the diagnosis system 100 in FIG. 1(a) and FIG. 1(b). The diagnosis solution shown in FIG. 3 may include the following steps.

S301: A client sends a "client hello (client hello)" message to a server, where the message includes password information, a character string "client random (client random)", and the like.

The client may be the diagnosis platform 111 or the diagnosis instrument 120 in FIG. 1(a) and FIG. 1(b), and the server may be the diagnosis module 130 in FIG. 1(a) and FIG. 1(b).

S302: The server responds with a "server hello (server hello)" message, where the message includes a password combination, a digital certificate, a random character string "server random (server random)", and the like.

The digital certificate may include a public key, issuer information, a company name, a domain name, a validity period, and the like.

S303: The client verifies the digital certificate, obtains the public key from the certificate, generates a next random character string premaster secret (premaster secret), and encrypts the next random character string premaster secret by using the public key.

S304: The client sends encrypted "premaster secret (premaster secret)" to the server.

S305: The server obtains the "premaster secret (premaster secret)" through decryption by using a private key.

S306: The client and the server use a same algorithm, and generate, for symmetric encryption in a subsequent procedure, a same key KEY by using "client random (client random)", "server random (server random), and "premaster secret (premaster secret)".

S307: The client sends a "finished (finished)" message to the server.

S308: The server sends a "finished (finished)" message to the client.

S309: A secure connection is successfully established, and the client and the server perform secure communication by using the common key KEY for symmetric encryption.

Steps S301 to S309 are a specific procedure of authenticating a communication device outside the vehicle by using a transport layer security (transport layer security, TLS) protocol. Although authenticity of the diagnosis platform and the diagnosis instrument can be verified by using this method, authenticity of a diagnostic user cannot be authenticated. Once the diagnosis platform or the diagnosis instrument is abused or maliciously diagnosed by an unauthorized person, privacy security, property security, and life safety of the user may be violated.

For example, the diagnosis platform or diagnosis instrument may be attacked by a hacker. After intruding the client, the hacker may steal or tamper with a diagnosis instruction. Because an identity of the user cannot be verified by using the foregoing method, once the vehicle executes the diagnosis instruction tampered by the hacker, property of the user may be lost.

For another example, a device operation and maintenance person of the diagnosis platform or the diagnosis instrument may perform an operation beyond a responsibility scope, causing a case in which a diagnosis instruction does not comply with an intention of the user. Because this case cannot be identified by using the foregoing method, once the vehicle executes a diagnosis instruction that does not comply with the operation intention of the user, privacy and property security of the user may not be ensured.

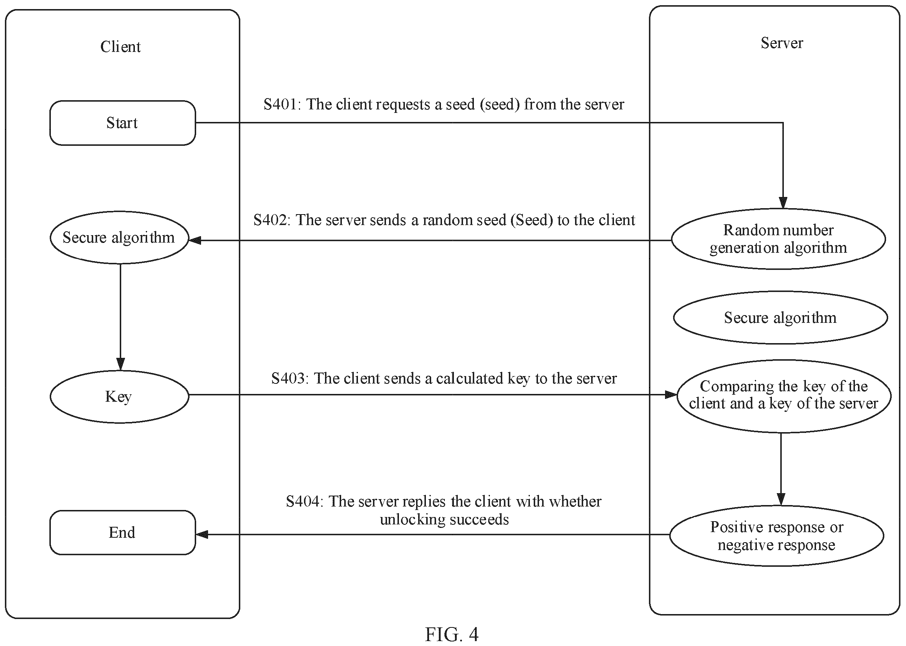

FIG. 4 shows another diagnosis solution according to an embodiment of this application. The diagnosis solution shown in FIG. 4 may be applied to the diagnosis system 100 in FIG. 1(a) and FIG. 1(b). The diagnosis solution shown in FIG. 4 may include the following steps.

S401: A client requests a seed (seed) from a server.

S402: The server sends a random seed (seed) to the client.

S403: The client sends a calculated key to the server.

Specifically, the server may compare a key stored in the server with the key sent by the client. If the two keys are the same, the server may send an unlocking success instruction to the client in step S404. If the two keys are different, the server may send an unlocking failure instruction in step S404.

S404: The server replies the client with whether unlocking succeeds.

Steps S401 to S404 are a specific procedure performed by using a unified diagnosis service 27 (unified diagnosis service 27, UDS 27). The USD 27 provides a protection mechanism for an ECU by using a seed and a key. A target ECU performs access control on a sensitive diagnosis service (for example, writing data to the ECU) by using a secure access service, and the ECU can execute the sensitive diagnosis service only by using the secure access service.

However, the UDS 27 secure access service is service-oriented access control, that is, the method can only protect a preset sensitive diagnosis service. Therefore, when the method is used to execute another service other than the sensitive diagnosis service, a diagnosis command is easily maliciously diagnosed and illegally manipulated by a diagnostic person or a hacker. In addition, because the method lacks a diagnosis access control mechanism oriented to a vehicle and a component, a specific component of the vehicle is easily maliciously diagnosed by the diagnostic person or the hacker.

It can be learned that, in actual application of the diagnosis solution in FIG. 3 or FIG. 4, the diagnosis platform and the diagnosis instrument are easily abused or maliciously diagnosed by an unauthorized person. This infringes privacy security, property security, and life safety of the user.

An embodiment of this application provides a diagnosis method, to prevent a vehicle from executing an incorrect or unauthorized diagnosis command, and ensure property and privacy security of a user.

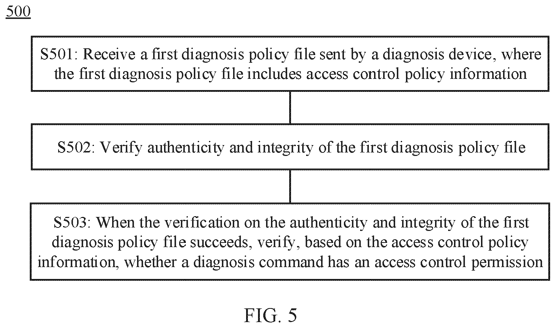

FIG. 5 shows a diagnosis method 500 according to an embodiment of this application. The method 500 may include the following steps.

S501: Receive a first diagnosis policy file sent by a diagnosis device, where the first diagnosis policy file includes access control policy information.

The diagnosis device may include a remote diagnosis platform or a local diagnosis instrument.

The access control policy information may include one or more of an authorization type, a validity period, vehicle identity information, an identifier ID, a timestamp, a version, a signature, and a certificate. The authorization type may be a type of a diagnosis policy file, for example, a remote diagnosis type or a local diagnosis type. The vehicle identity information and the identifier ID may be used to verify authority of a diagnosed target, and the validity period may be used to monitor validity of diagnosis time. The version may be a format version of the first diagnosis policy file, and recording of the version may facilitate future update of a format file. The signature may be a signature of a cloud authorization management system. The signature may be verified on a vehicle. When signature verification succeeds, authenticity and integrity of the diagnosis policy file are ensured.

In a possible implementation, the receiving a first diagnosis policy file sent by a diagnosis device includes: when authorization of a vehicle owner is obtained, receiving the first diagnosis policy file sent by the diagnosis device.

The vehicle owner can perform authorization with a specific valid period by using an online/offline service agreement or by making a call, to meet a privacy compliance requirement. For example, before diagnosis starts, the vehicle owner needs to sign or select a diagnosis service agreement. The vehicle can execute a diagnosis task after the vehicle detects that the vehicle owner signs or selects the diagnosis service agreement. The diagnosis service agreement may include but is not limited to a diagnosed object, diagnosis permission, a resource that needs to be invoked by the vehicle to execute the diagnosis task, and the like. For another example, before diagnosis starts, the vehicle owner may request to perform vehicle diagnosis by making a call. In this case, the vehicle owner may agree to the diagnosis service agreement by default. For another example, the vehicle owner may trigger a diagnosis procedure by using an application on the vehicle.

In embodiments of this application, the vehicle can receive the first diagnosis policy file after being authorized by the vehicle owner, to subsequently verify, based on the access control policy information in the first diagnosis policy file, whether a diagnosis command has an access control permission.

In a possible implementation, the diagnosis device includes the local diagnosis instrument, the first diagnosis policy file includes a first key, and the method further includes: storing the first key in the vehicle, where the vehicle is a vehicle that is to execute the diagnosis command; verifying whether the first key is consistent with a second key, where the second key is a key stored in the local diagnosis instrument; and establishing a secure access service with the local diagnosis instrument when the first key is consistent with the second key.

The secure access service can be established between the vehicle and the local diagnosis instrument only when the first key is consistent with the second key. After the secure access service is established, the local diagnosis instrument can verify, based on the access control policy information in the diagnosis policy file, whether the diagnosis command has the diagnosis control permission.

Both the first key and the second key may be temporary keys. An application process of the first key and the second key may be as follows: First, a key management system generates the second key, and sends the second key to an authorization management system; the authorization management system sends the second key with the first diagnosis policy file to the local diagnosis instrument after generating the first diagnosis policy file; and the local diagnosis instrument may store the second key in the local diagnosis instrument after obtaining the second key. Then, the local diagnosis instrument delivers the first key with the first diagnosis policy file to the vehicle, and the vehicle stores the first key. During key verification, if the first key is consistent with the second key, that is, the first key is the second key, it indicates that the second key is not tampered with by the local diagnosis instrument in a transfer process. If the first key is inconsistent with the second key, it indicates that the second key may be tampered with, and a diagnosis process is insecure.

Whether the first key is consistent with the second key may alternatively be verified in a plurality of manners.

In a possible implementation, the local diagnosis instrument may send a ciphertext to the vehicle, and the vehicle verifies the ciphertext to determine whether the first key is consistent with the second key.

In a possible implementation, the local diagnosis instrument may directly send the stored second key to the vehicle after storing the first key in the vehicle through the first diagnosis policy file, and the vehicle verifies whether the first key is consistent with the second key.

It should be understood that, a reason for verifying whether the first key is consistent with the second key is to be compatible with a local diagnosis instrument of an earlier version. If a diagnostic user uses the local diagnosis instrument of the earlier version to diagnose the vehicle, execution of the diagnosis command may fail if key verification is not performed.

In a possible implementation, the diagnosis device includes the local diagnosis instrument, and the method further includes: receiving a first key sent by the local diagnosis instrument; storing the first key in the vehicle, where the vehicle is a vehicle that is to execute the diagnosis command; verifying whether the first key is consistent with a second key, where the second key is a key stored in the local diagnosis instrument; and establishing a secure access service with the local diagnosis instrument when the first key is consistent with the second key.

Both the first key and the second key may be temporary keys. An application process of the first key and the second key may be: First, after a key management system generates the second key, and sends the second key to the local diagnosis instrument, the local diagnosis instrument stores the second key. Then, the local diagnosis instrument directly delivers the first key to the vehicle, and the vehicle stores the first key. During key verification, if the first key is consistent with the second key, that is, the first key is the second key, it indicates that the second key is not tampered with by the local diagnosis instrument in a transfer process. If the first key is inconsistent with the second key, it indicates that the second key may be tampered with, and a diagnosis process is insecure.

In embodiments of this application, whether the first key is consistent with the second key is verified to determine whether a secure access service is established between the vehicle and the diagnosis platform. The vehicle can verify, based on the access control policy information, whether the diagnosis command has the access control permission only after the secure access service is established. In this way, security and authority of execution of the diagnosis command can be further ensured.

S502: Verify authenticity and integrity of the first diagnosis policy file.

The authenticity and integrity of the first diagnosis policy file may be verified in a plurality of manners.

In a possible implementation, the access control policy information includes a certificate and a signature, and the verifying authenticity and integrity of the first diagnosis policy file includes: decrypting the signature by using a public key of the certificate, to obtain a first digital digest; performing hash calculation on the access control policy information, to obtain a second digital digest; and verifying whether the first digital digest is consistent with the second digital digest.

Optionally, before the signature is decrypted by using the certificate, the method further includes: verifying authenticity and validity of the certificate.

Optionally, the authenticity and integrity of the first diagnosis policy file may be verified by using a symmetric key. Encryption calculation is performed on the access control policy information by using the symmetric key, to obtain the second digital digest. Whether the first digital digest is consistent with the second digital digest is verified. In a process of performing verification in this manner, the access control policy information may include the first digital digest, and the first digital digest does not need to be obtained by decrypting the signature by using the public key.

In embodiments of this application, hash calculation may be performed on the access control policy information, to obtain the second digital digest, and the second digital digest is compared with the first digital digest to verify the authenticity and integrity of the first diagnosis policy file. In this way, when verification on the authenticity and integrity of the first diagnosis policy file succeeds, whether the diagnosis command has the access control permission is verified by using the access control policy information in the first diagnosis policy file. This can further ensure property and privacy security of the user.

With reference to the first aspect, in some implementations of the first aspect, the verifying authenticity and integrity of the first diagnosis policy file includes: verifying whether first vehicle identity information matches the vehicle, where the vehicle is a vehicle that is to execute the diagnosis command.

For example, the first vehicle identification information is a vehicle identification number. A first vehicle identification number may be compared with an identification code of the vehicle to determine whether the first vehicle identification number matches the vehicle. If the first vehicle identification number is consistent with the identification code of the vehicle, verification succeeds. If the first vehicle identification number is inconsistent with the identification code of the vehicle, verification fails. The vehicle identification number may be viewed on a front partition plate of an engine compartment or an instrument console of the vehicle.

In embodiments of this application, whether the first vehicle identity information matches the vehicle is determined to verify the authenticity and integrity of the first diagnosis policy file. In this way, when verification on the authenticity and integrity of the first diagnosis policy file succeeds, whether the diagnosis command has the access control permission is verified by using the access control policy information in the first diagnosis policy file. This can further ensure property and privacy security of the user.

With reference to the first aspect, in some implementations of the first aspect, before the receiving a first diagnosis policy file sent by a diagnosis device, the method further includes: receiving a second diagnosis policy file sent by the diagnosis device, where the second diagnosis file includes a third timestamp. The verifying authenticity and integrity of the first diagnosis policy file includes:
verifying whether the first timestamp is greater than the third timestamp.

Time at which the vehicle receives the second diagnosis policy file is earlier than time at which the vehicle receives the first diagnosis policy file. The second diagnosis policy file may be a diagnosis policy file used when the diagnosis command is executed last time, or may be a diagnosis policy file that has not been used. Whether the first timestamp is greater than the third timestamp is verified to determine whether the first diagnosis policy file is reused or under a replay attack. If the first timestamp is less than the third timestamp, it indicates that the first diagnosis policy file may be reused or under the replay attack, and the policy file is not authentic. If the first time stamp is greater than the third time stamp, verification on the authenticity and integrity of the first diagnosis policy file succeeds.

In embodiments of this application, a size relationship between the first timestamp and the third timestamp is verified to determine whether the first diagnosis policy file is reused or under the replay attack. When verification succeeds, whether the diagnosis command has the access control permission is verified by using the access control policy information in the first diagnosis policy file. This can further ensure property and privacy security of the user.

With reference to the first aspect, in some implementations of the first aspect, the verifying authenticity and integrity of the first diagnosis policy file includes: determining whether a difference between the first timestamp and local time of the vehicle is less than or equal to a preset threshold.

If the difference between the first timestamp and the local time of the vehicle is less than or equal to the preset threshold, verification on the authenticity and integrity of the first diagnosis policy file succeeds. If the difference between the first timestamp and the local time of the vehicle is greater than the preset threshold, it indicates that the first diagnosis policy file may be reused or under the replay attack.

In embodiments of this application, a size relationship between the first timestamp and the local time of the vehicle is verified to determine whether the first diagnosis policy file is reused or under the replay attack. When verification succeeds, whether the diagnosis command has the access control permission is verified by using the access control policy information in the first diagnosis policy file. This can further ensure property and privacy security of the user.

It should be understood that the foregoing manners of verifying the authenticity and integrity of the first diagnosis policy file may be used separately or in combination. For example, the method for verifying whether the first vehicle identity information matches the vehicle may be used independently. When the method is used independently, it is determined that the first vehicle identity information matches the vehicle, and verification on the authenticity and integrity of the first diagnosis policy file succeeds. For another example, consistency of the first digital digest and the second digital digest may be first verified, and then whether the first vehicle identification number matches the vehicle is verified. Verification on the authenticity and integrity of the first diagnosis policy file succeeds only when both verifications succeed.

It should be further understood that, when different verification methods are used in combination, an execution sequence of the verification methods may be in a sequence, or the verification methods may be performed simultaneously.

S503: When verification on the authenticity and integrity of the first diagnosis policy file succeeds, verify, based on the access control policy information, whether the diagnosis command has the access control permission.

In embodiments of this application, before executing the diagnosis command, the vehicle can verify, based on the access control policy information in the first diagnosis policy file, whether the diagnosis command has the access control permission. The diagnosis command is executed only when the diagnosis command has the access control permission. In this way, the vehicle can be prevented from executing an incorrect or unauthorized diagnosis command, and property and privacy security of the user can be ensured.

There may be a plurality of implementations of verifying whether the diagnosis command has the access control permission by using the access control policy information.

In a possible implementation, the access control policy information includes a validity period. The verifying, based on the access control policy information, whether a diagnosis command has an access control permission includes: within the validity period, verifying, based on the access control policy information, whether the diagnosis command has the access control permission.

In embodiments of this application, only when the diagnosis policy file is within a validity period, whether the diagnosis command has the access control permission is verified by using the access control policy information in the diagnosis policy file. In this way, the diagnosis policy file can be prevented from being still used after being invalid. This improves security of using the diagnosis policy file.

In a possible implementation, the access control policy information further includes the first vehicle identity information. The verifying, based on the access control policy information, whether a diagnosis command has an access control permission includes: verifying whether the first vehicle identity information is consistent with second vehicle identity information, where the diagnosis command includes the second vehicle identity information.

The first vehicle identity information may be information indicating a vehicle identity, and may include but is not limited to a vehicle identification number. When the first vehicle identity information in the access control policy information is consistent with the diagnosis command, it may be determined that the diagnosis command has the access control permission.

In embodiments of this application, whether the first vehicle identity information is consistent with the second vehicle identity information is verified to verify whether the diagnosis command has the access control permission. This can further ensure property security and privacy security of the user.

In a possible implementation, the first vehicle identity information and/or the second vehicle identity information are/is a vehicle identification number.

In a possible implementation, the access control policy information further includes a first identifier ID. The first identifier ID includes at least one of a first electronic control unit ID, a first CAN ID, a first diagnosis service ID, and a first diagnosis data ID. The verifying, based on the access control policy information, whether a diagnosis command has an access control permission includes: verifying whether the first identifier ID is consistent with a second identifier ID, where the second identifier ID is an identifier ID in the diagnosis command, and the second identifier ID includes at least one of a second electronic control unit ID, a second CAN ID, a second diagnosis service ID, and a second diagnosis data ID.

When the first identifier ID is consistent with the second identifier ID, the diagnosis command can take effect for a corresponding electronic control unit, or the vehicle can use a corresponding diagnosis service or corresponding diagnosis data.

The second electronic control unit ID may be an ID of the electronic control unit corresponding to the diagnosis command, the second CAN ID may indicate an address or a name of a CAN node that sends and receives the diagnosis command, the second diagnosis service ID may be a service ID required for executing the diagnosis command, and the second diagnosis data ID may be a data ID required for executing a diagnosis service or the diagnosis command.

In embodiments of this application, when the first identifier ID in the diagnosis command is consistent with the second identifier ID in the access control policy information, the diagnosis command can take effect for the corresponding electronic control unit, or the vehicle can use the corresponding diagnosis service or diagnosis data. In this way, not only a diagnosis access control mechanism oriented to the vehicle and the component is provided, but also an access mechanism oriented to the diagnosis service is provided. This ensures security and effectiveness of the diagnosis command.

In a possible implementation, the access control policy information further includes a first timestamp. The verifying, based on the access control policy information, whether a diagnosis command has an access control permission includes: verifying whether a second timestamp is greater than the first timestamp, where the second timestamp is a timestamp of the diagnosis command.

When the second timestamp is greater than the first timestamp, the diagnosis command has the access control permission. When the second timestamp is smaller than the first timestamp, the diagnosis command does not have the access control permission.

Optionally, in this implementation, it may be set that the diagnosis command has the access control permission when the second timestamp is greater than the first timestamp and execution time of a diagnosis task is within a validity period of the access control policy information.

It should be understood that, in this step, whether the timestamp of the diagnosis task is greater than a timestamp of the access control policy information is ensured to prevent the diagnosis task from being reused or under a replay attack, that is, it needs to be ensured that time at which the vehicle receives the diagnosis command is later than time at which the vehicle receives the diagnosis policy file.

In embodiments of this application, whether the second timestamp is greater than the first timestamp is verified to prevent the diagnosis task from being reused or under a replay attack. This can further ensure property security and privacy security of the user.

It should be understood that, in the method 500, a process of verifying validity of the diagnosis command by using the first diagnosis policy file is described by using the vehicle as a subject. The vehicle may be a shared taxi or a private car, or the vehicle in the method 500 may be replaced with a charging pile of a household or commercial intelligent vehicle.

The following describes the process of generating and delivering the first diagnosis policy file by using a diagnosis platform or an authorization management system as a subject.

An embodiment of this application provides another diagnosis method. The method is applied to a diagnosis device, and the diagnosis device includes a remote diagnosis platform or a local diagnosis instrument. The method includes: sending first request information to an authorization management system, where the first request information is used to request the authorization management system to generate a first diagnosis policy file, and the first diagnosis policy file is used to verify whether a diagnosis command has an access control permission; receiving the first diagnosis policy file sent by the authorization management system; and sending the first diagnosis policy file to a vehicle, where the vehicle is a vehicle that is to execute the diagnosis command.

In embodiments of this application, the diagnosis device receives the first diagnosis policy file from the authorization management system, and forwards the first diagnosis policy file to the vehicle, so that the vehicle subsequently verifies, based on the first diagnosis policy file, whether the diagnosis command has the access permission.

In a possible implementation, before the sending first request information to an authorization management system, the method further includes: obtaining identity information of a diagnostic person; and sending the identity information of the diagnostic person to the authorization management system. The sending first request information to an authorization management system includes: sending the first request information to the authorization management system when receiving first response information sent by the authorization management system, where the first response information indicates that identity verification of the diagnostic person succeeds.

The identity information of the diagnostic person may be expressed in a plurality of forms. For example, the identity information of the diagnostic person may be account information. The account information may be created by an OEM, an account and a password are allocated to the diagnostic person, and the diagnostic person enters the account and the password on the diagnosis platform or the diagnosis instrument. For another example, the identity information may be facial feature information of the diagnostic person. An OEM may enter facial feature information of a qualified person that performs diagnosis into the diagnosis instrument or the diagnosis platform in advance, and the diagnostic person needs to log in to the diagnosis platform or the diagnosis instrument by verifying the facial feature information. In addition, the identity information may be iris feature information, voiceprint feature information, or the like of the diagnostic person. Details are not described herein.

In embodiments of this application, the diagnostic person needs to log in to the diagnosis platform before performing diagnosis. The diagnosis device needs to send the identity information of the diagnostic person to the authorization management system, and the authorization management system performs authentication. After receiving authentication success information from the authorization management system, the diagnosis device can request the authorization management system to send the first diagnosis policy file. In this way, an identity verification mechanism of the diagnostic person is provided. This can avoid privacy security, property security, and life safety of a user from being infringed due to abuse or malicious diagnosis of the diagnosis platform or the diagnosis instrument by an unauthorized person.

In a possible implementation, the first diagnosis policy file includes a second key. Before the sending the first diagnosis policy file to a vehicle, the method further includes: storing the second key in the diagnosis device, where the diagnosis device is the local diagnosis instrument.

In embodiments of this application, the diagnosis device may obtain the second key from the first diagnosis policy file, and store the second key in the diagnosis device, so that the vehicle subsequently verifies consistency between a first key and the second key.

In a possible implementation, the method further includes: receiving a second key sent by a key management system, storing the second key in the diagnosis device, and sending a first key to the vehicle, where the vehicle is a vehicle that is to execute the diagnosis command.

An embodiment of this application provides another diagnosis method. The method is applied to an authorization management system, and the method includes: receiving first request information sent by a diagnosis device, generating a first diagnosis policy file based on the first request information, where the first diagnosis policy file is used to verify whether a diagnosis command has an access control permission; and sending the first diagnosis policy file to the diagnosis device.

In a possible implementation, before the receiving first request information sent by a diagnosis device, the method further includes: receiving identity information of a diagnostic person sent by the diagnosis device; and sending first response information to the diagnosis device when the identity information of the diagnostic person is consistent with identity information preset in the authorization management system, where the first response information indicates that identity verification of the diagnostic person succeeds.

The identity information of the diagnostic person may alternatively be verified in a plurality of manners. For example, if the identity information of the diagnostic person is account information, the authorization management system needs to verify an account and a password entered by the diagnostic person, and send the first response information to the diagnosis device after verification succeeds, to notify the diagnostic person that identity verification succeeds. For another example, if the identity information of the diagnostic person is facial feature information, the authorization management system may compare the facial feature information with facial feature information preset in the system, and send first response information to the diagnosis device after verification succeeds, to notify the diagnostic person that identity verification succeeds.

In embodiments of this application, after receiving the identity information of the diagnostic person sent by the diagnosis platform, the authorization management system can verify the identity information, to identify authority of the diagnostic user, and send the first diagnosis policy file to the diagnosis device when the diagnostic user is authorized. In this way, an identity verification mechanism of the diagnostic person is provided before diagnosis. This can avoid privacy security, property security, and life safety of the user from being infringed due to abuse or malicious diagnosis of the diagnosis platform or a diagnosis instrument by an unauthorized person.

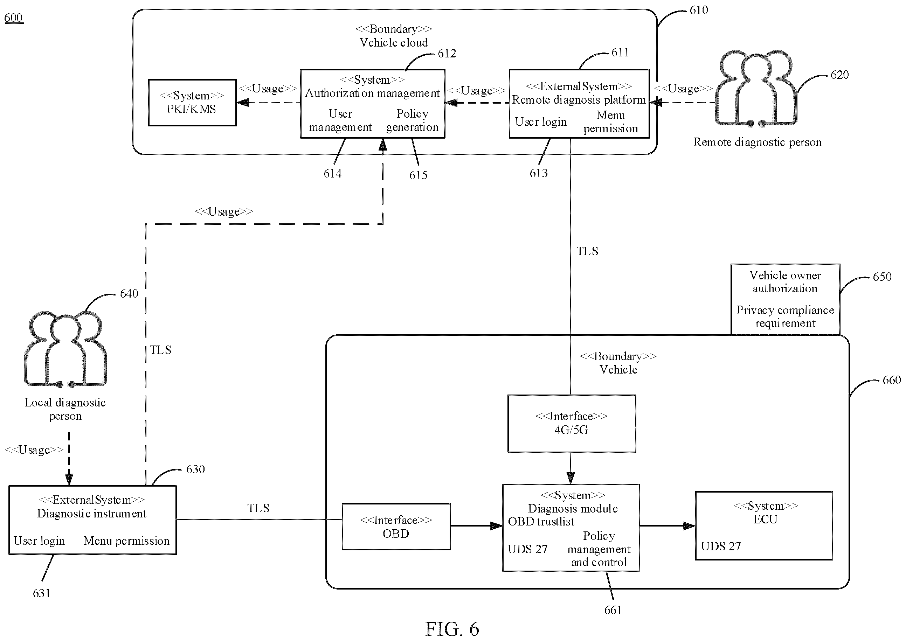

FIG. 6 is a system architecture 600 to which a diagnosis method is applicable according to an embodiment of this application. The system architecture 600 may be a system architecture to which the method 500 is applicable.

As shown in FIG. 6, the system architecture 600 may include a cloud server 610, a remote diagnostic person 620, a diagnosis instrument 630, a local diagnostic person 640, a vehicle-side authorization module 650, and a vehicle 660.

The cloud server 610 may further include a remote diagnosis platform 611 and an authorization management system 612. The remote diagnosis platform 611 includes a user login module 613, and the authorization management system 612 includes a user management module 614 and a policy generation module 615. The diagnosis instrument 630 includes a user login module 631. The vehicle 660 includes a policy management and control module 661. The vehicle 600 may be the vehicle 200 in FIG. 2.

Before the diagnosis method is implemented by using the system architecture 600, the following settings need to be performed.

### (1) Role creating

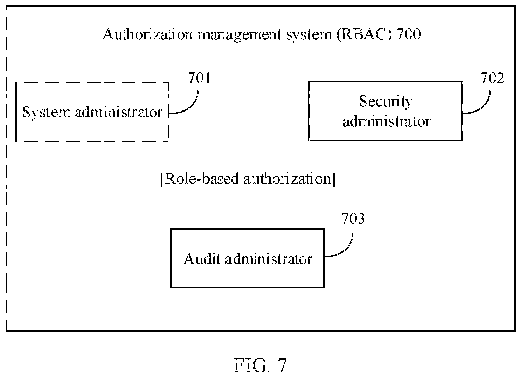

An OEM can create a role by using a role creation method shown in FIG. 7. As shown in FIG. 7, the OEM may create the role by using an authorization control system 700 (role-based access control, RBAC). An RBAC system may include a system administrator 701, a security administrator 702, and an audit administrator 703. The system administrator 701 may be responsible for creating the role, the security administrator 702 may be responsible for authorizing the created role, and the audit administrator 703 may be responsible for verification creation and authorization of the role. That is, authorization of the three roles can be separated in the RBAC system.

In a process of creating the role by using the RBAC system, the system management administrator 701 may create a role type, the security administrator 702 grants corresponding permissions to different types of roles, and then the audit administrator 703 performs verification.

For example, a remote diagnostic role and a local diagnostic role can be created by using the RBAC system. The remote diagnostic role is granted with a read-only diagnosis service permission (for example, with a read-only security identifier (security identifier, SID) permission), and the local diagnostic role is granted with a read-write diagnosis service permission (for example, with a read-write SID permission).

It should be understood that the RBAC is one type of the authorization management system 612 in FIG. 6. The RBAC is merely an example for description. Herein, another authorization management system may be used to create the role.

### (2) User creating

The OEM can create a user account for a diagnostic person. When creating the account, the OEM can assign a corresponding role to the diagnostic person. The diagnostic person with the corresponding role has a corresponding diagnosis service permission. In addition, the OEM can configure a vehicle resource permission for the account, that is, vehicle types and components that can be diagnosed by a user.

For example, it may be set that an OEM-type diagnostic person may diagnose all components in a vehicle of a first vehicle type, and a vendor-type diagnostic person may diagnose a specific component in the vehicle of the first vehicle type.

### (3) Vehicle owner authorization

Before diagnosis starts, a vehicle owner can perform authorization with a specific valid period by using an online/offline service agreement or by making a call, to meet a privacy compliance requirement.

For example, before diagnosis starts, the vehicle owner needs to sign or select a diagnosis service agreement. The vehicle can execute a diagnosis task after the vehicle detects that the vehicle owner signs or selects the diagnosis service agreement. The diagnosis service agreement may include but is not limited to a diagnosed object, diagnosis permission, a resource that needs to be invoked by the vehicle to execute the diagnosis task, and the like.

For another example, before diagnosis starts, the vehicle owner may request to perform vehicle diagnosis by making a call. In this case, the vehicle owner may agree to the diagnosis service agreement by default.

In actual application of the diagnosis method 500 in the system architecture, the remote diagnostic person 620 needs to log in to the system by using the user login module 631, and the user management module 614 verifies a user identity. After identity verification succeeds, the policy generation module 615 can generate a diagnosis policy file, and deliver the diagnosis policy file to the vehicle 600 by using the remote diagnosis platform 611. Similarly, the local diagnostic person 640 needs to log in by using the user login module 631, and the user management module 614 verifies the user identity. After identity verification succeeds, the policy generation module 615 generates the diagnosis policy file, and then delivers the diagnosis policy file to the vehicle 600 by using the diagnosis instrument 630.

After receiving the diagnosis policy file, the vehicle 600 may verify the diagnosis policy file by using the policy management and control module 661. In addition, before diagnosis is performed, the vehicle owner may manage the diagnosis policy file from a perspective of privacy compliance by using the vehicle owner authorization module 650.

In embodiments of this application, when performing diagnosis, the diagnostic person needs to log in to the corresponding account on the diagnosis platform or the diagnosis instrument, and an authorization platform verifies an identity of the diagnostic person. The diagnosis platform or the diagnosis instrument can deliver the diagnosis policy file to the vehicle after identity verification succeeds. In this way, a risk that the diagnosis platform or the diagnosis instrument is abused or maliciously diagnosed by an unauthorized person can be reduced. This protects privacy security, property security, and life safety of the user.

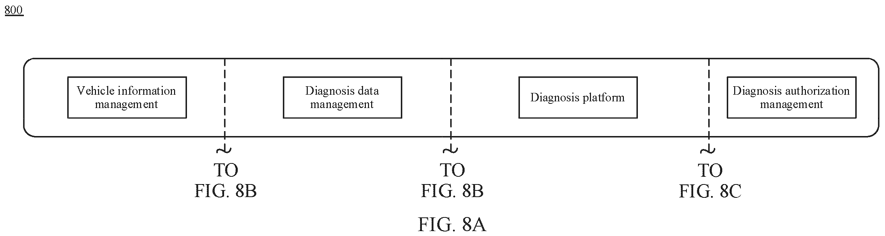

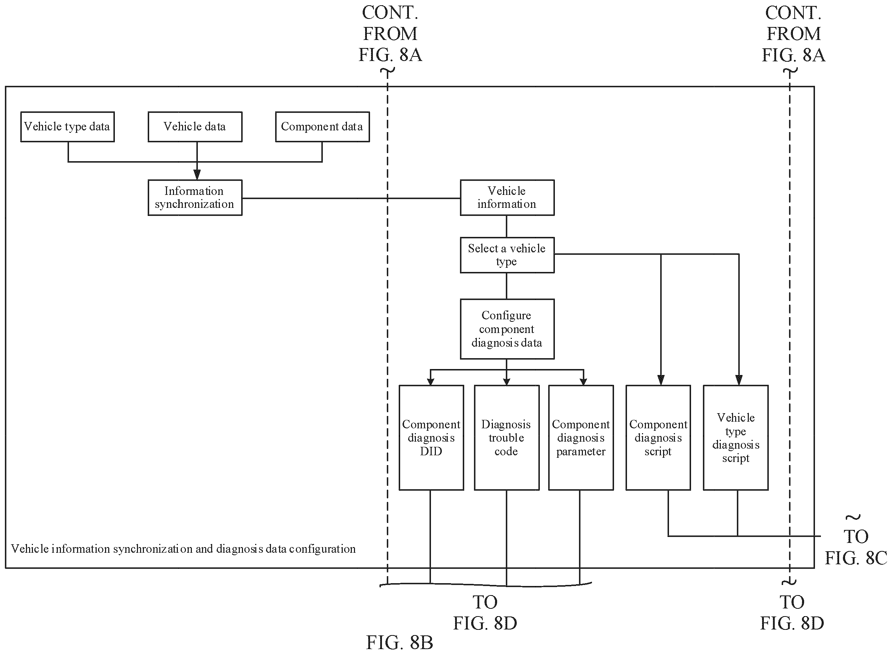

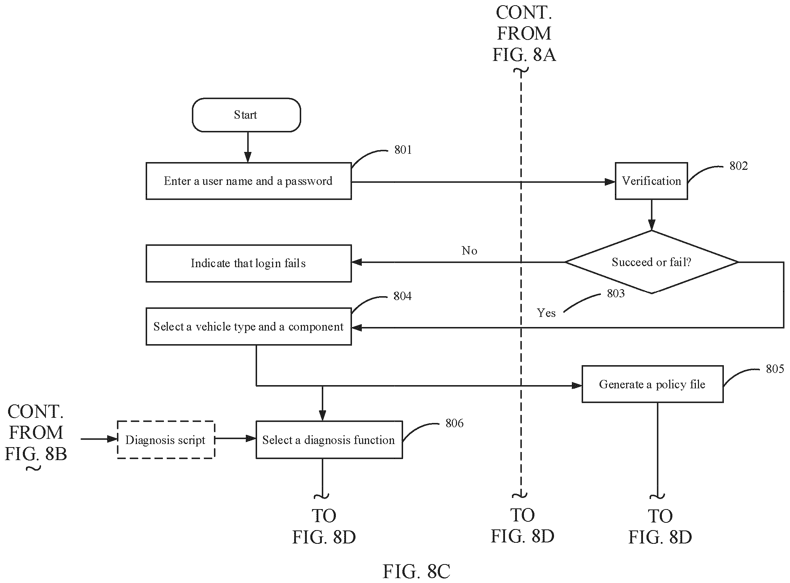

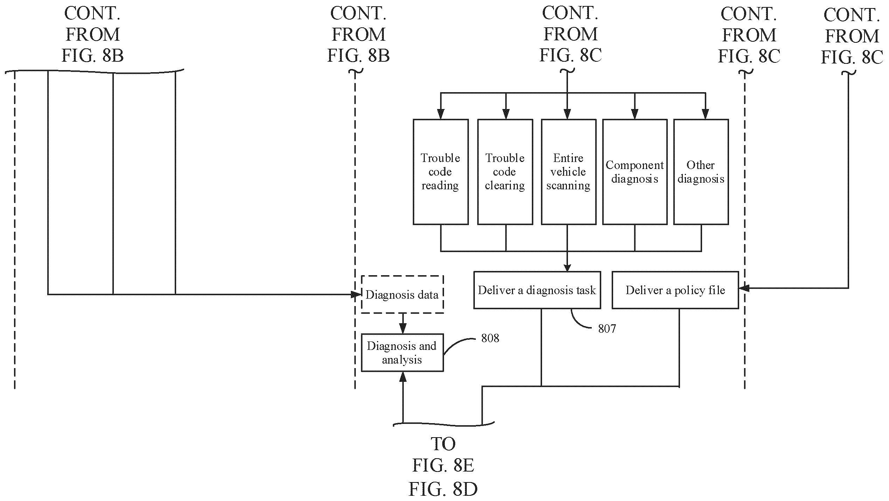

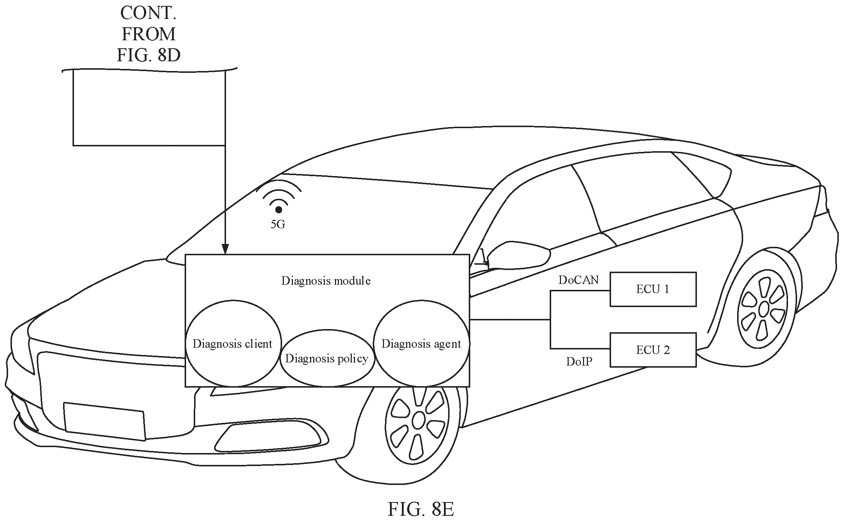

The following describes a remote diagnosis execution process in detail with reference to FIG. 8A to FIG. 10.

FIG. 8A to FIG. 8E show a remote diagnosis method 800 according to an embodiment of this application. The method 800 may be applied to the system architecture in FIG. 6.

Before the method 800 is performed, vehicle information synchronization and diagnosis data configuration need to be performed. Vehicle information synchronization may include: A vehicle sends vehicle type data, vehicle data, and component data to a cloud server, and the cloud server completes vehicle information synchronization. A process of diagnosis data configuration may include: A diagnosis platform determines a corresponding vehicle type based on the foregoing data, generates a diagnosis script, and generates diagnosis data.

The diagnosis script may include a diagnosis script of a vehicle component and/or a diagnosis script of the vehicle type, and the diagnosis data may include at least one of a component diagnosis data ID, a diagnosis trouble code, and a component diagnosis parameter.

After the foregoing preparation work is completed, the method 800 may be performed, and the method 800 may include the following steps.

S801: A diagnostic user enters a user name and a password for login.

Specifically, the diagnostic user enters, on the diagnosis platform for login, the user name and the password of an account created by an OEM.

S802: An authorization management system performs identity verification on the user name and the password.

Specifically, the authorization management system 612 may perform identity verification on the user name and the password that are entered by the diagnostic person in step S801. If the verification is successful, step S803 is performed. If the verification fails, the diagnostic user is prompted with a login failure, and a diagnosis process ends.

S803: After login succeeds, the diagnostic user enters a menu of a corresponding permission.

Specifically, the diagnostic user can view a diagnosis permission in a permission menu. The diagnostic user can deliver a diagnosis policy only within the permission. A diagnosis policy delivered beyond the permission is invalid.

S804: Select the vehicle type and the component for diagnosis.

Specifically, the diagnostic user selects the vehicle type and the component that need to be diagnosed.

S805: The authorization management system generates a diagnosis policy file based on selection of the diagnostic user, and delivers the diagnosis policy file to a vehicle side.

The diagnosis policy file may be used to verify authenticity and integrity of a diagnosis instruction.

S806: The diagnostic user selects a diagnosis function, and the system generates a corresponding diagnosis task.

The diagnosis function may be generated by using the diagnosis script, and the diagnosis function may include one or more of trouble code reading, trouble code clearing, entire vehicle scanning, component determining, and other diagnosis.

S807: Deliver the diagnosis task to the vehicle side, and execute the diagnosis task.

Specifically, in step S806, after the diagnostic user selects the diagnosis function, the diagnosis platform generates the diagnosis task, and sends the diagnosis task to the vehicle side for execution.

S808: Return an execution result to the diagnosis platform.

Specifically, after executing the diagnosis task, the vehicle may report the execution result and execution data to the diagnosis platform, and the diagnosis platform compares the execution result with the diagnosis data, to analyze a status of executing the diagnosis task by the vehicle.

In embodiments of this application, before remote diagnosis is performed, identity information of a diagnostic person needs to be verified. When the identity information of the diagnostic person meets a regulation, the diagnostic person can deliver the diagnosis instruction or the diagnosis policy file to the vehicle side within a permission range by using the diagnosis platform. In this way, a person beyond the diagnosis permission range can be prevented from illegally operating the vehicle and a component resource. This improves security of remote diagnosis.

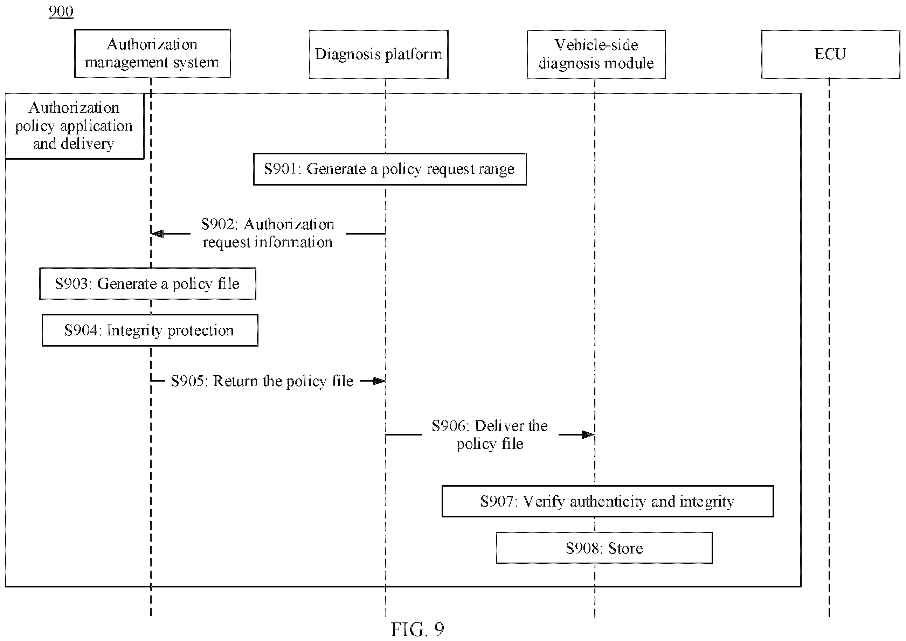

FIG. 9 shows a diagnosis policy file generation and delivery method 900 in a remote diagnosis process according to an embodiment of this application. The method 900 may be a specific process of step S805 in FIG. 8A to FIG. 8E. The method 900 may include the following steps.

S901: A diagnosis platform generates a diagnosis policy request range.

Specifically, the diagnosis policy request range may include an authorization type, a diagnosed target, and a diagnosis validity period.

S902: The diagnosis platform submits an authorization request to an authorization management system.

Specifically, the diagnosis platform sends authorization request information to the authorization management system. The information is used to request the diagnosis authorization management system to generate and return a diagnosis policy file based on the diagnosis policy request range. The authorization request information may be the first request information in the method 500.

S903: The authorization management system generates the diagnosis policy file.

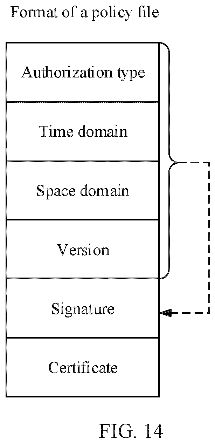

Specifically, the authorization management system generates the diagnosis policy file based on the authorization request information. Specific content of the diagnosis policy file is described in detail in FIG. 14.

S904: Perform integrity protection on the diagnosis policy file.

Integrity protection is performed on the diagnosis policy file to prevent the diagnosis policy file from being illegally tampered with. Integrity protection on the diagnosis policy file may be implemented by signing the diagnosis policy file.

S905: Return the diagnosis policy file to the diagnosis platform.

S906: The diagnosis platform delivers the diagnosis policy file to a vehicle-side diagnosis module.

The vehicle-side diagnosis module may be the diagnosis client module 131 in FIG. 1(a) and FIG. 1(b).

S907: The vehicle-side diagnosis module verifies authenticity and integrity of the diagnosis policy file.

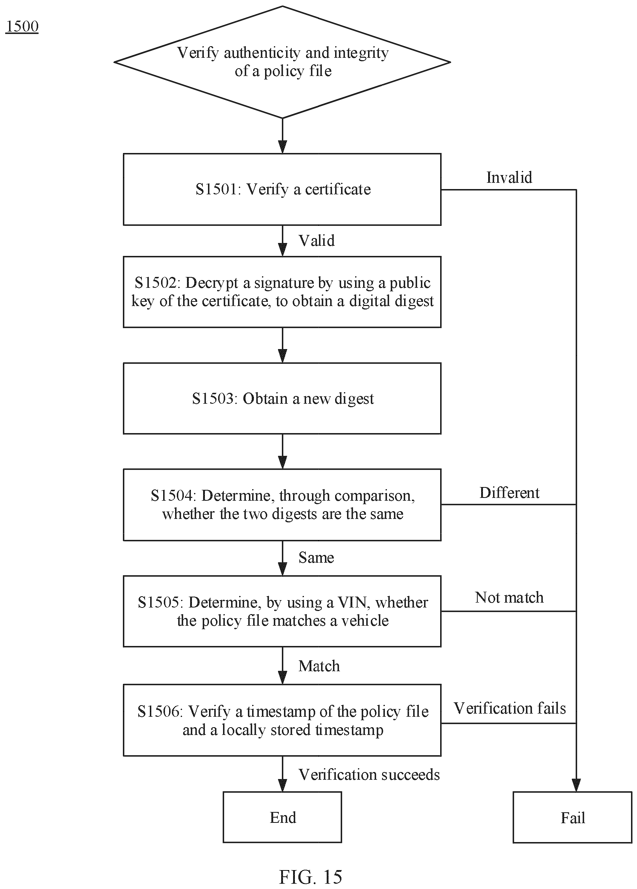

Specifically, a detailed process in which the vehicle-side diagnosis module verifies the authenticity and the integrity of the diagnosis policy file is described in detail in FIG. 15.

S908: The vehicle-side diagnosis module stores the diagnosis policy file in the vehicle after verification of the diagnosis policy file succeeds.

In embodiments of this application, the authorization management system can generate and deliver the diagnosis policy file to the vehicle side based on the policy request range of the diagnosis platform, and the vehicle-side diagnosis module can store the diagnosis policy file after verifying authenticity and integrity, to facilitate subsequent detection and verification of the diagnosis instruction.

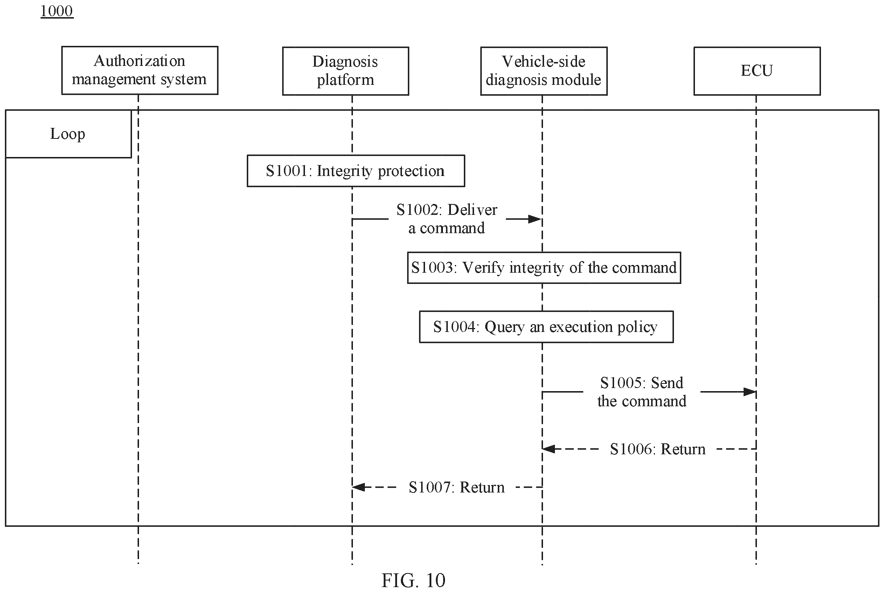

FIG. 10 shows a method 1000 for delivering and executing a diagnosis task in a remote diagnosis process according to an embodiment of this application. The method 1000 may be a specific process of step S807 in FIG. 8A to FIG. 8E. The method 1000 may include the following steps.

S1001: A diagnosis platform performs integrity protection on a diagnosis task or diagnosis command.

Specifically, the diagnosis platform performs integrity protection on the diagnosis task or the diagnosis command to prevent the diagnosis task or the diagnosis command from being illegally tampered with. A specific implementation may be performing integrity protection on the diagnosis task or the diagnosis command in an encryption manner or the like when the diagnosis platform establishes a communication channel with the vehicle.

S1002: The diagnosis platform delivers the diagnosis task or the diagnosis command to a vehicle-side diagnosis module.

Specifically, the vehicle-side diagnosis module may be the diagnosis module 130 in FIG. 1(a) and FIG. 1(b).

S1003: The vehicle-side diagnosis module verifies integrity of the diagnosis task and the diagnosis command.

S1004: The vehicle-side diagnosis module verifies validity of the diagnosis task or the diagnosis command by using a diagnosis policy file.

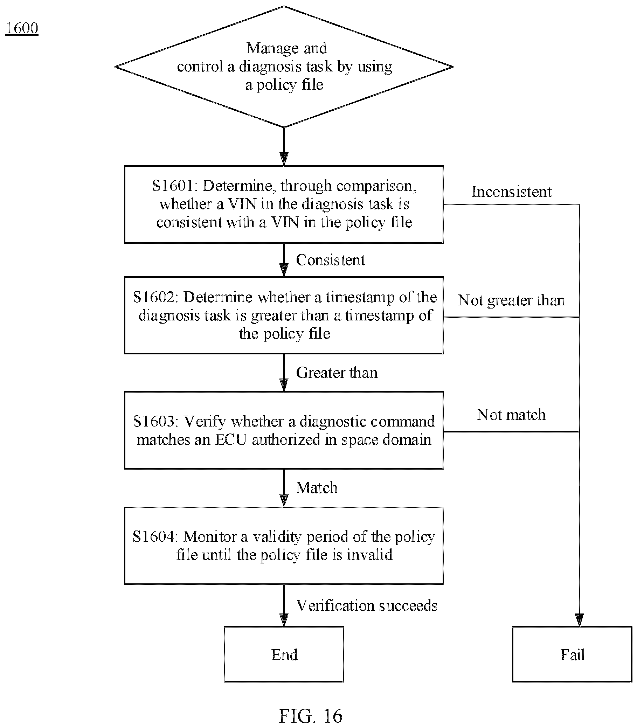

Specifically, a process in which the vehicle-side diagnosis module verifies the diagnosis task or the diagnosis command by using the diagnosis policy file is described in detail in FIG. 16.

It should be understood that this step may also be understood as verifying, based on the diagnosis policy file, whether the diagnosis task or the diagnosis command has an access control permission.

S1005: After verification succeeds, the vehicle-side diagnosis module sends a command to a corresponding ECU for execution.

Specifically, after verification of the diagnosis task or the diagnosis command by using the diagnosis policy file succeeds, the vehicle-side diagnosis module may send, by using the diagnosis agent module 133, the diagnosis command to the ECU for execution.

S1006: The ECU returns a diagnosis result to the vehicle-side diagnosis module.

Specifically, after executing the diagnosis command, the ECU may return the diagnosis result to the diagnosis agent module 133.

S1007: The vehicle-side diagnosis module returns the diagnosis result to the diagnosis platform by using a diagnosis client.

Specifically, the diagnosis agent module 133 may send the diagnosis result to the diagnosis platform by using the diagnosis client module 131.

In embodiments of this application, the diagnosis task or the diagnosis command can be verified by using the diagnosis policy file, and the ECU of and vehicle can receive and execute the corresponding diagnosis task or diagnosis command after verification succeeds. In this way, authenticity and integrity of execution of the diagnosis task or the diagnosis command can be ensured on the vehicle side.

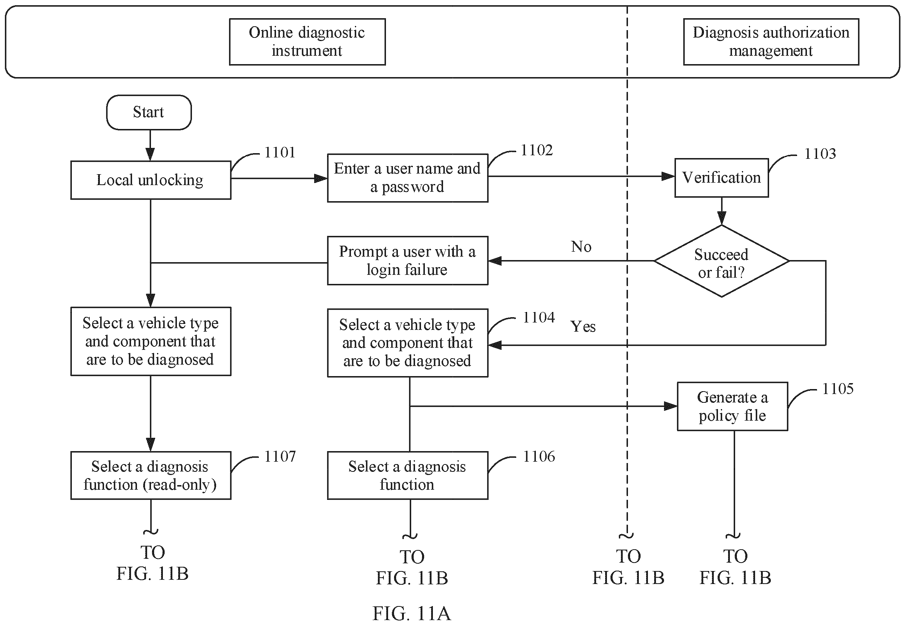

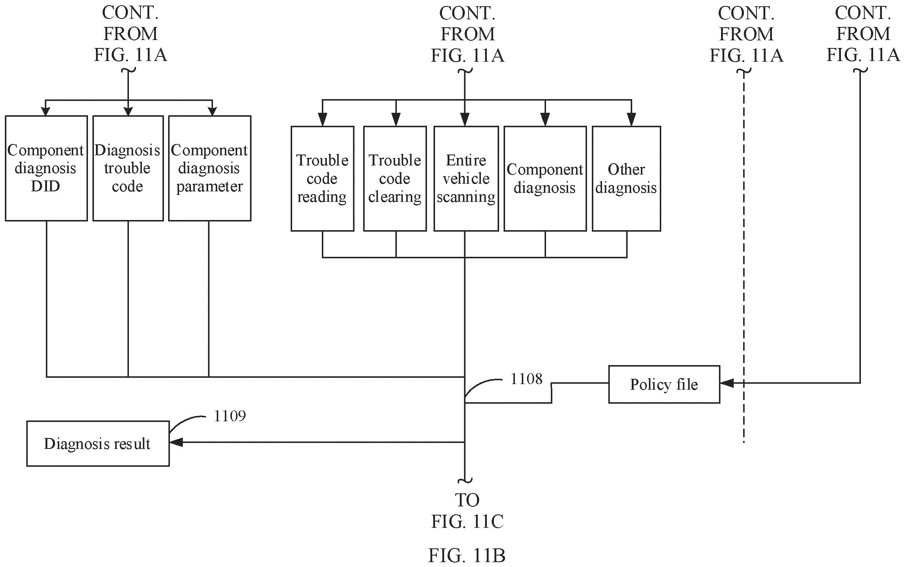

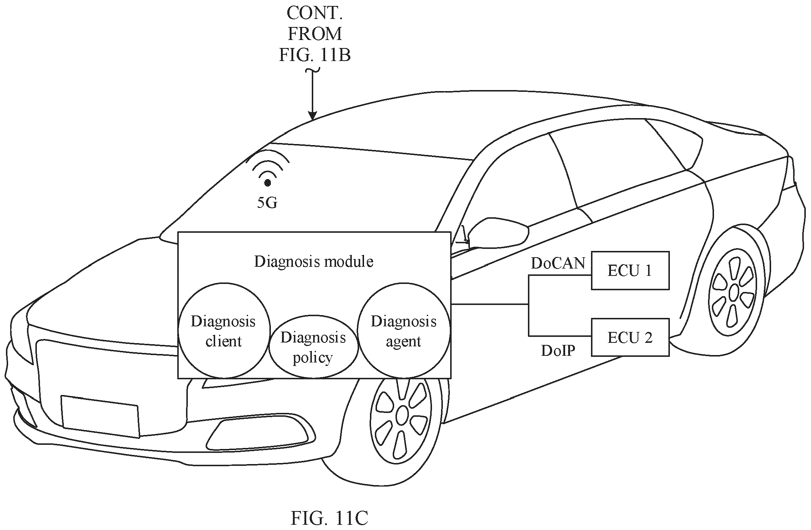

The following describes a local diagnosis execution process in detail with reference to FIG. 11A to FIG. 13.

FIG. 11A to FIG. 11C show a local diagnosis method 1100 according to an embodiment of this application. The method 1100 may be applied to the system architecture in FIG. 6. The method 1100 may include the following steps.

S1101: A diagnostic user locally unlocks an online diagnosis instrument.

S1102: Enter a user name and a password that have permissions.

Specifically, the user name and the password may be a user name and a password that have been configured by an OEM for the diagnostic user.

S1103: A diagnosis authorization management system performs identity verification.

Specifically, after the diagnostic user enters the user name and the password, the authorization management system can verify an identity of the diagnostic user. If the verification succeeds, step S1104 is performed. If the verification fails, the user is prompted with a login failure or steps S1107 to S1109 are performed in sequence.

S1104: After login succeeds, select a vehicle type and a component that need to be diagnosed.

Specifically, after login succeeds, the diagnostic person may select, within a permission range, the vehicle type and the vehicle component that need to be diagnosed.

S1105: The diagnosis authorization management system generates a diagnosis policy file, and delivers the diagnosis policy file to a vehicle side by using the diagnosis instrument.

S1106: Select a diagnosis function.

Specifically, the diagnostic user may select the diagnosis function on the diagnosis instrument. The diagnosis function may include one or more of trouble code reading, trouble code clearing, entire vehicle scanning, component diagnosing, and other diagnosis. Because the diagnostic user has completed identity verification, the diagnostic user obtains a read and write permission when selecting the diagnosis function. After the diagnostic user selects the diagnosis function, step S1108 may be directly performed.

S1107: Select a diagnosis function.

Specifically, when the diagnostic user fails to log in or does not log in, a permission and a menu for selecting the diagnosis function are different from those in a case of successful login.

For example, in step S1102, when the diagnostic user fails to log in or does not log in, if the diagnostic user operates the diagnosis instrument to select the diagnosis function, the diagnostic user can only obtain a read-only permission, and diagnosis functions that can be selected may include: trouble code reading, entire vehicle scanning, and another read diagnosis function.

S1108: Send a diagnosis command to a vehicle, and execute the diagnosis command.

Specifically, the diagnosis instrument sends the diagnosis command to the vehicle, and an ECU in the vehicle executes the diagnosis command.

S1109: Return a diagnosis result to the diagnosis instrument.

Specifically, after executing the diagnosis command, the vehicle returns the diagnosis result to the diagnosis instrument.

In embodiments of this application, before local diagnosis is performed, identity information of the diagnostic person needs to be verified. When the identity information of the diagnostic person meets a regulation, the diagnostic person can select more diagnosis functions, and obtain more diagnosis permissions. In this way, corresponding diagnosis permissions can be granted to different types of diagnostic persons. This ensures that different types of diagnostic persons deliver diagnosis commands within corresponding permission ranges.

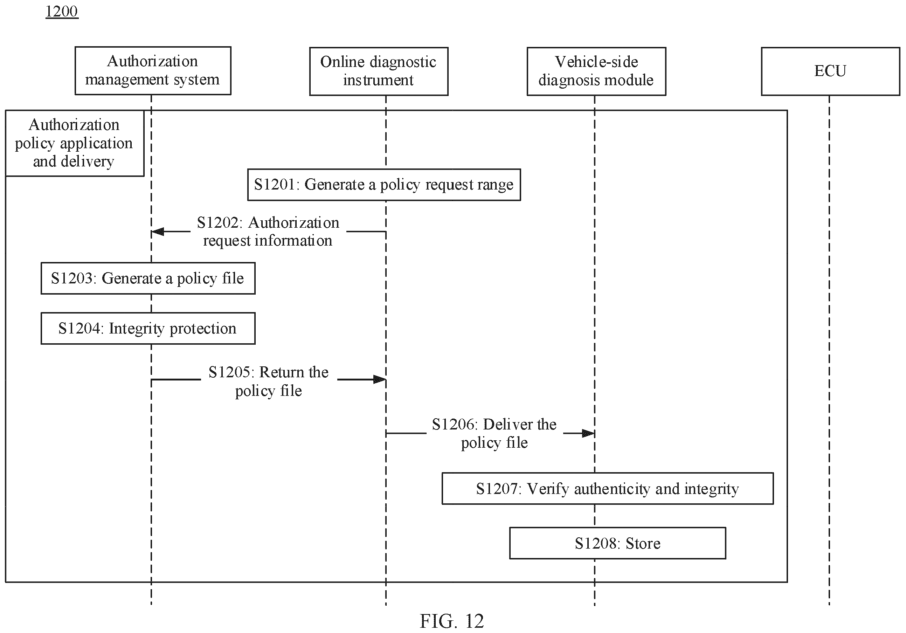

FIG. 12 shows a method 1200 for generating and delivering a diagnosis policy file in a local diagnosis process according to an embodiment of this application. The method 1200 may be a specific process of step S1105 in FIG. 11A to FIG. 11C, and the method 1200 may include the following steps.

S1201: A diagnosis instrument generates a policy request range.

Specifically, the diagnosis policy request range may include an authorization type, a diagnosed target, and a diagnosis validity period.

S1202: The diagnosis instrument submits an authorization request to an authorization management system.

Specifically, the diagnosis instrument sends authorization request information to the authorization management system. The information is used to request the diagnosis authorization management system to generate and return a diagnosis policy file based on the diagnosis policy request range. The authorization request information may be the first request information in the method 500.

S1203: The authorization management system generates the diagnosis policy file.

Specifically, the authorization management system generates the diagnosis policy file based on the authorization request information. Specific content of the diagnosis policy file is described in detail in FIG. 14.

S1204: Perform integrity protection on the diagnosis policy file.

Integrity protection is performed on the diagnosis policy file to prevent the diagnosis policy file from being illegally tampered with. Integrity protection on the diagnosis policy file may be implemented by setting a signature for the diagnosis policy file.

S1205: Return the diagnosis policy file to the diagnosis instrument.

S1206: The diagnosis instrument forwards the diagnosis policy file to a vehicle-side diagnosis module.

S1207: The vehicle-side diagnosis module verifies authenticity and integrity of the diagnosis policy file.

Specifically, a detailed process in which the vehicle-side diagnosis module verifies the authenticity and the integrity of the diagnosis policy file is described in FIG. 15.

S1208: The vehicle-side diagnosis module stores the diagnosis policy file in the vehicle after verification of the diagnosis policy file succeeds.

In embodiments of this application, the authorization management system can generate and deliver the diagnosis policy file to the vehicle side based on the policy request range of the diagnosis instrument, and the vehicle-side diagnosis module can store the diagnosis policy file after verifying integrity, to facilitate subsequent detection and verification of a diagnosis command.

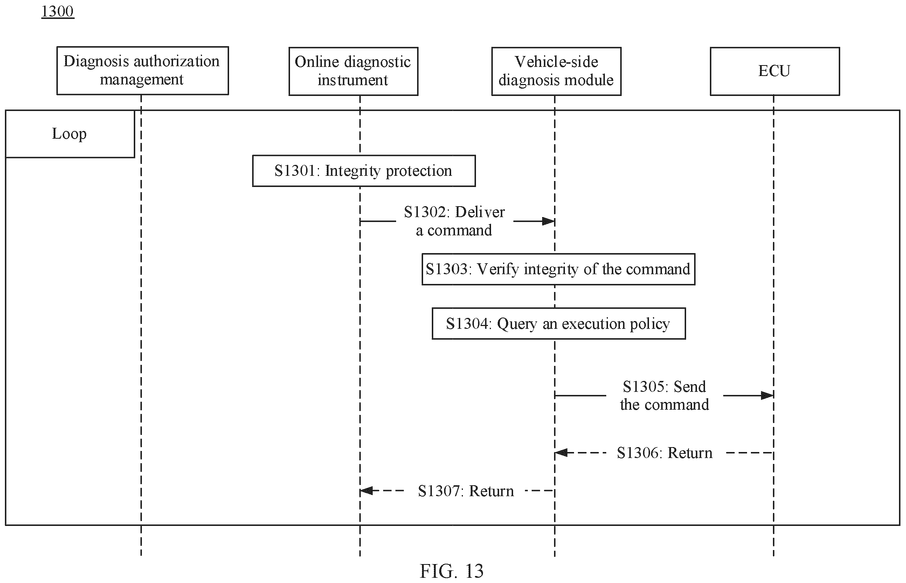

FIG. 13 shows a method 1300 for delivering and executing a diagnosis task in a local diagnosis process according to an embodiment of this application. The method 1300 may be a specific process of step S1106 or S1107 in FIG. 11A to FIG. 11C, and the method 1300 may include the following steps.

S1301: A diagnosis instrument performs integrity protection on a diagnosis task or diagnosis command.

Specifically, the diagnosis instrument performs integrity protection on the diagnosis task or the diagnosis command to prevent the diagnosis task or the diagnosis command from being illegally tampered with.

S1302: The diagnosis instrument delivers the diagnosis task or the diagnosis command to a vehicle-side diagnosis module.

The vehicle-side diagnosis module may be the diagnosis module 130 in FIG. 1(a) and FIG. 1(b).

S1303: The vehicle-side diagnosis module verifies integrity of the diagnosis task and the diagnosis command.

Specifically, a detailed process in which the vehicle-side diagnosis module verifies integrity of a diagnosis policy file is described in FIG. 15.

S1304: The vehicle-side diagnosis module verifies the diagnosis task or the diagnosis command by using the diagnosis policy file.

Specifically, a process in which the vehicle-side diagnosis module verifies the diagnosis task or the diagnosis command by using the diagnosis policy file is described in detail in FIG. 16.

It should be understood that this step may also be understood as verifying, based on the diagnosis policy file, whether the diagnosis task or the diagnosis command has an access control permission.

S1305: After verification succeeds, the vehicle-side diagnosis module sends a command to a corresponding ECU for execution.

Specifically, after verification of the diagnosis task or the diagnosis command by using the diagnosis policy file succeeds, the vehicle-side diagnosis module may send, by using the diagnosis agent module 133, the diagnosis command to the ECU for execution.

S1306: The ECU returns a diagnosis result to the vehicle-side diagnosis module.

Specifically, after executing the diagnosis command, the ECU may return the diagnosis result to the diagnosis agent module 133.

S1307: The vehicle-side diagnosis module returns the diagnosis result to the diagnosis instrument by using a diagnosis client.

Specifically, the diagnosis agent module 133 may send the diagnosis result to the diagnosis instrument by using the diagnosis client module 131.

In embodiments of this application, the diagnosis task or the diagnosis command can be verified by using the diagnosis policy file, and the ECU of and vehicle can receive and execute the corresponding diagnosis task or diagnosis command after verification succeeds. In this way, validity and authority of execution of the diagnosis task or the diagnosis command can be ensured on the vehicle side.

FIG. 14 is a schematic diagram of a format of a diagnosis policy file according to an embodiment of this application. The diagnosis policy file shown in FIG. 14 may be the diagnosis policy file in FIG. 8A to FIG. 13.

The diagnosis policy file is involved in both a remote diagnosis procedure and a local diagnosis procedure. The diagnosis policy file is used by a vehicle-side diagnosis module to verify, before executing the diagnosis command, whether a diagnosis command is valid in time and space, that is, a diagnosis service needs to diagnose an authorized ECU within authorized time and an authorized space range.

As shown in FIG. 14, formats of the diagnosis file may include: an authorization type, a space domain, a time domain, a version, a signature, and a certificate. The authorization type may be a type of the diagnosis policy file. For example, the type of the diagnosis policy file may be local diagnosis or remote diagnosis. The authorization type indicates that a plurality of diagnosis policy files of a same type can coexist. For example, diagnosis policy files of local diagnosis and remote diagnosis can coexist. Alternatively, the authorization type may indicate that a specific diagnosis policy file type is valid. For example, when diagnosis policy files of local diagnosis and remote diagnosis coexist, the local diagnosis policy file may be valid, and the remote diagnosis policy file may be invalid.

The spatial domain may be used to verify authority of a diagnosed target, and verification in spatial domain may include at least one of vehicle identification number (vehicle identification number, VIN) verification, ECU verification, CAN ID verification, diagnosis service ID verification, and data ID verification. The time domain may be used to monitor validity of diagnosis time, and verification in time domain may include: verification whether a timestamp of a monitoring script is within an authorized time range, and monitoring whether the diagnosis policy file is valid. The version may be a format version of the diagnosis policy file, and recording of the version may facilitate future update of a format file. The signature may be a signature of a cloud authorization management system. The signature may be verified on a vehicle side. When signature verification succeeds, authenticity and integrity of the diagnosis policy file are ensured.

It should be understood that the authorization type, the space domain, the time domain, the version, the signature, and the certificate in the diagnosis policy file may alternatively be reflected in access control policy information in the diagnosis policy file.

In embodiments of this application, the format of the diagnosis policy file may be set, to verify, by using the diagnosis policy file, whether the diagnosis command is valid in time and space, so as to ensure validity and authority of execution of a diagnosis task or the diagnosis command on the vehicle side.

FIG. 15 is a flowchart 1500 of verifying authenticity and integrity of a diagnosis policy file according to an embodiment of this application. The method 1500 may be applied to step S907 in FIG. 9 or step S1207 in FIG. 12.

The diagnosis policy file is automatically generated and delivered by a diagnosis instrument or diagnosis platform based on a diagnosed target and diagnosis function selected by a diagnostic person. The diagnosis policy file is automatically used on a vehicle side to verify and control a diagnosis command. The vehicle side may verify authenticity and integrity of the diagnosis policy file after receiving the diagnosis policy file, and store the diagnosis policy file in a vehicle after verification succeeds. Therefore, an entire process does not require too much participation of the diagnostic person. This reduces a risk of diagnosis beyond authority of the diagnostic person.

Verification on the integrity and authenticity of the diagnosis policy file may include the following steps.

S1501: Verify a certificate.

Specifically, after receiving the diagnosis policy file, the vehicle verifies whether the certificate in the diagnosis policy file is valid. If the certificate is valid, step S1502 is performed. If the certificate is invalid, an integrity and authenticity verification procedure of the diagnosis policy file ends.

S1502: Decrypt a signature by using a public key of the certificate, to obtain a digital digest.

Specifically, the vehicle decrypts the signature of the diagnosis policy file by using the public key of the certificate, to obtain the digital digest. The digital digest may be a string of ciphertext of a fixed length (128 bits) output by using a one-way hash function to convert plaintext that needs to be encrypted. The digital digest is obtained according to a hash algorithm, and may also be referred to as a hash value.

S1503: Obtain a new digest.

Specifically, the vehicle performs hash calculation on an authorization type, a space domain, a time domain, and a version in the diagnosis policy file, to obtain the new digest.

S1504: Determine, through comparison, whether the two digests are the same.

Specifically, the vehicle determines whether the digest is the same as the new digest through comparison. If the digest is the same as the new digest, step S1505 is performed. If the digest is different from the new digest, the integrity and authenticity verification procedure of the diagnosis policy file ends.

It should be understood that the digital digest is a value of a fixed length corresponding to a message or a text. If the diagnosis policy file received by the vehicle is tampered with in a transfer process, after the vehicle performs same hash calculation on the received diagnosis policy file, the obtained new digest is different from the original digest. Therefore, the authenticity and integrity of the diagnosis policy file may be verified by determining whether the two digests are the same through comparison.

S1505: Determine, by using a VIN, whether the diagnosis policy file matches the vehicle.

Specifically, whether the VIN in the diagnosis policy file is consistent with a VIN of the vehicle is determined, to determine whether the diagnosis policy file matches the vehicle. If the diagnosis policy file matches the vehicle, step S1506 is performed. If the diagnosis policy file does not match the vehicle, the integrity and authenticity verification procedure of the diagnosis policy file ends.

S1506: Verify a timestamp of the diagnosis policy file and a locally stored timestamp.

Specifically, the timestamp of the diagnosis policy file is compared with the locally stored timestamp. The locally stored timestamp may be a timestamp at which the vehicle receives the diagnosis policy file last time. If the timestamp of the diagnosis policy file is greater than or equal to the locally stored timestamp, verification on the integrity and the authenticity of the diagnosis policy file succeeds, and the vehicle stores the diagnosis policy file in the vehicle, and starts to calculate a validity period of the diagnosis policy file. If the timestamp of the diagnosis policy file is smaller than the locally stored timestamp, the integrity and authenticity verification procedure of the diagnosis policy file ends.

It should be understood that the timestamp of the diagnosis policy file and the locally stored timestamp are verified to prevent the diagnosis policy file from being reused or under a replay attack. If the timestamp of the diagnosis policy file is smaller than the locally stored timestamp, the diagnosis policy file may be modified, and is not authentic.

Optionally, this step may also be replaced with verifying whether a difference between a timestamp parameter of the diagnosis policy file and local time of the vehicle is less than or equal to a preset threshold. If the difference is less than or equal to the preset threshold, verification succeeds. If the difference is greater than the preset threshold, verification fails.

In embodiments of this application, the vehicle may verify the authenticity and the integrity of the diagnosis policy file after receiving the diagnosis policy file, and store the diagnosis policy file in the vehicle after verification succeeds, so that the diagnosis policy file is subsequently used to verify the diagnosis command.

FIG. 16 shows a method 1600 for managing and controlling a diagnosis task or a diagnosis command by using a policy file according to an embodiment of this application. The method 1600 may be applied to step S1004 in FIG. 10 or step S1304 in FIG. 13. The method 1600 may include the following steps.

S1601: Determine, through comparison, whether a VIN in the diagnosis task is consistent with a VIN in a diagnosis policy file.

Specifically, in this step, whether the VIN in the diagnosis task is consistent with the VIN in the diagnosis policy file is determined through comparison, to determine whether the diagnosis task matches a vehicle. If the VIN in the diagnosis task is consistent with the VIN in the diagnosis policy file, step S1602 is performed. If the VIN in the diagnosis task is inconsistent with the VIN in the diagnosis policy file, a diagnosis task execution procedure ends.

Optionally, in a local diagnosis process, step S1601 may alternatively be skipped.

It should be understood that, in step S1505 in FIG. 15, it is verified that the VIN in the diagnosis policy file is consistent with the VIN of the vehicle. In this case, if the VIN in the diagnosis task is consistent with the VIN in the diagnosis policy file, it indicates that the diagnosis task matches the vehicle.

S1602: Determine whether a timestamp of the diagnosis task is greater than a timestamp of the diagnosis policy file.

Specifically, in this step, it may be determined whether the timestamp of the diagnosis task is greater than the timestamp of the diagnosis policy file. If the timestamp of the diagnosis task is greater than the timestamp of the diagnosis policy file, step S1603 is performed. If the timestamp of the diagnosis task is not greater than the timestamp of the diagnosis policy file, the diagnosis task execution procedure ends.

Optionally, in the local diagnosis process, step S1602 may alternatively be skipped.

It should be understood that, in this step, whether the timestamp of the diagnosis task is greater than the timestamp of the diagnosis policy file is ensured to prevent the diagnosis task from being reused or under a replay attack, that is, it needs to be ensured that time at which the vehicle receives the diagnosis command is later than time at which the vehicle receives the diagnosis policy file.

S1603: Verify whether the diagnosis command matches an ECU authorized in space domain.

Specifically, in this step, whether the diagnosis command matches the ECU authorized in space domain in the diagnosis policy file may be verified. If the diagnosis command matches the ECU authorized in space domain, step S1604 is performed arbitrarily. If the diagnosis command does not match the ECU authorized in space domain, the diagnosis task execution procedure ends.

Optionally, this step may alternatively be replaced with verification whether the diagnosis command matches one or more of the following: a CAN ID, a diagnosis service ID, and a diagnosis data ID that are authorized in space domain in the diagnosis policy file.

S1604: Monitor a validity period of the diagnosis policy file until the diagnosis policy file is invalid.

Specifically, when the diagnosis policy file is valid, the diagnosis policy file is used to detect the diagnosis task or the diagnosis command. If the diagnosis policy file is invalid, a diagnosis procedure ends.

In embodiments of this application, the diagnosis task may be verified by using the diagnosis policy file, and the ECU of the vehicle can receive and execute the corresponding diagnosis task or diagnosis command after verification succeeds. In this way, authenticity and integrity of execution of the diagnosis task or the diagnosis command can be ensured on the vehicle side.

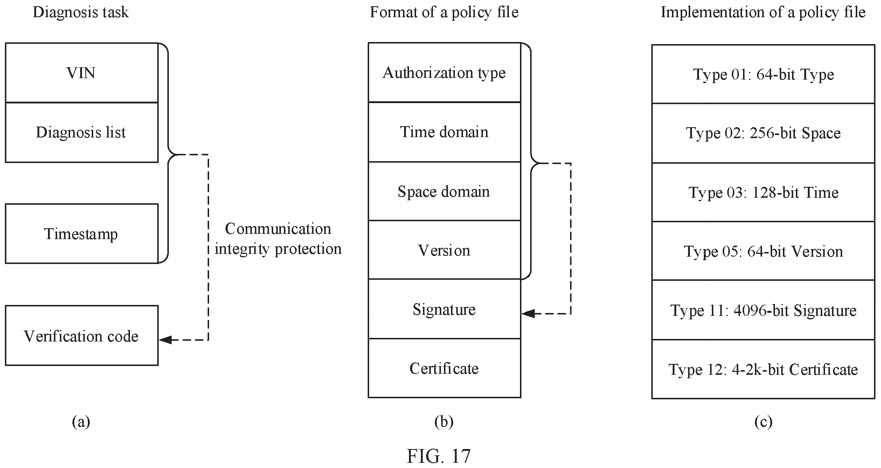

The following describes the entire diagnosis process in detail with reference to FIG. 17.

### (1) Role creating

Before diagnosis is performed, an OEM can create roles as described in Table 1.

**Table 1**

| Scenario | Diagnosis device | SID permission | | Role | Remark |
|---|---|---|---|---|---|
| | | Level | Diagnosis service | | |
| Remote diagnosis | Diagnosis platform | Read only | UDS [10, 11, 27, 28, 3E, 85, 22, 14, 19] | Remote diagnosis | Roles may be created or role permissions may be adjusted as services expand |
| Repair at 4S shops | Diagnostic instrument | Read and write | UDS [10, 11, 27, 28, 3E, 85, 22, 14, 19, 2E, 2F, 31, 34, 35, 36, 37, 18] | Local diagnosis | |

The diagnosis service may be a corresponding permission specified in a UDS protocol for remote diagnosis or local diagnosis.

### (2) User creating

After the role is created, a user can be created by using the method described in Table 2. CDC in Table 2 may be continuous a continuous damping control (continuous damping control, CDC) system.

**Table 2**

| User | Role | Resource permission | |
|---|---|---|---|
| | | Vehicle type | ECU |
| Diagnostic person of a CDC supplier | Local diagnosis | F2 | CDC |
| OEM remote diagnostic person | Remote diagnosis | F4 | Entire vehicle |

### (3) Vehicle owner authorization

The vehicle owner can send an application to the diagnosis platform by making a call, to request the OEM remote diagnostic person to perform diagnosis.

### (4) Diagnosis performing

Diagnosis performing may specifically include the following steps.

S1701: The OEM remote diagnostic person enters a user name and a password on the diagnosis platform for login.

S1702: An authorization management system performs identity verification on the user name and the password.

S1703: After login succeeds, the OEM remote diagnostic person enters a menu of a corresponding permission.

S1704: The diagnostic person selects the vehicle type and a diagnosis resource. According to settings in Table 2, the vehicle type selected by the diagnostic person is F4, and the selected diagnosis ECU is an entire vehicle ECU.

S1705: The diagnosis platform generates a policy request range based on the vehicle type F4 and permissions of all components in the vehicle.

S1706: The diagnosis platform submits an authorization request to the authorization management system.

S1707: The authorization management system generates a diagnosis policy file based on the authorization request.

S1708: The authorization management system performs integrity protection on the diagnosis policy file.

S1709: The authorization management system returns the diagnosis policy file to a remote diagnosis platform.

S1710: The diagnosis platform delivers the diagnosis policy file to a vehicle diagnosis client.

The diagnosis client may be the diagnosis client module 131 in FIG. 1(a) and FIG. 1(b).

S1711: The diagnosis client verifies integrity of the policy file, and stores the policy file after verification succeeds, where verification on the integrity may be performed by using the method shown in FIG. 15.

A format of the diagnosis task in steps S1705 to S1711 may be shown in (a) in FIG. 17, a format of the diagnosis policy file may be shown in (b) in FIG. 17, and a specific implementation of the diagnosis policy file may be shown in (c) in FIG. 17.

S1712: The OEM remote diagnostic person selects a vehicle scanning function, and the diagnosis platform generates the corresponding diagnosis task.

S1713: The diagnosis platform performs integrity protection on the diagnosis task.

S1714: The diagnosis platform delivers the diagnosis task to a vehicle-side diagnosis module.

S1715: The diagnosis module verifies integrity of the diagnosis task.

Specifically, the diagnosis module may be the diagnosis module 130 in FIG. 1(a) and FIG. 1(b).

S1716: Extract a diagnosis command from the diagnosis task, and verify the diagnosis command by using the diagnosis policy file, where the method shown in FIG. 16 may be used to verify the diagnosis command by using the diagnosis policy file.

S1717: After verification succeeds, a diagnosis agent module sends the diagnosis command to the corresponding ECU for execution.

Specifically, the diagnosis agent module may be the diagnosis agent module 133 in FIG. 1(a) and FIG. 1(b).

S1718: After completing the diagnosis task, the ECU returns a diagnosis result to the diagnosis agent module.

S1719: The diagnosis agent returns the diagnosis result to the diagnosis platform by using a diagnosis client.

S1720: Successfully return an execution result to the diagnosis platform.

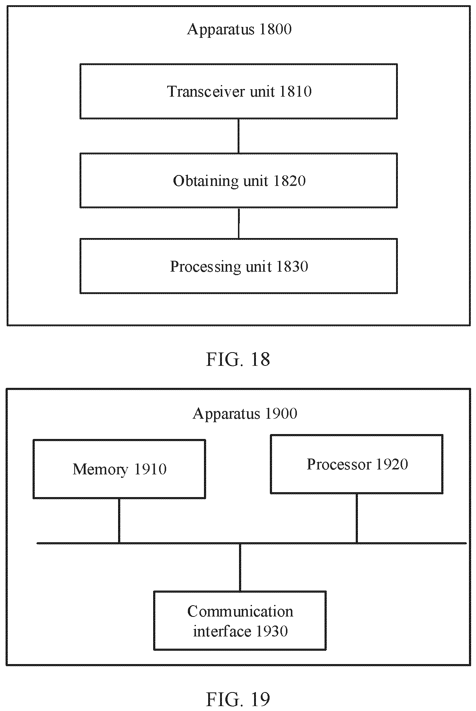

FIG. 18 is a schematic diagram of a diagnosis apparatus 1800 according to an embodiment of this application. The apparatus 1800 may be applied to the vehicle 100 in FIG. 2.

The apparatus 1800 may include a transceiver unit 1810, an obtaining unit 1820, and a processing unit 1830. The transceiver unit 1810 may implement a corresponding communication function, and the transceiver unit 1810 may also be referred to as a communication interface or a communication unit. The obtaining unit 1820 is configured to obtain a corresponding instruction and/or data. The processing unit 1830 is configured to process the corresponding instruction and/or data, and the processing unit 1830 may read instructions and/or data in a storage unit, to enable the apparatus to implement the foregoing method embodiments.

Optionally, the apparatus 1800 further includes a storage unit, configured to store a corresponding instruction and/or data.

In a design, the apparatus 1800 may be configured to perform actions performed by the vehicle in the foregoing method embodiments.

The apparatus 1800 includes: a transceiver unit 1810, configured to receive a first diagnosis policy file sent by a diagnosis device, where the first diagnosis policy file includes access control policy information, and the diagnosis device includes a remote diagnosis platform or a local diagnosis instrument; and a processing unit 1830, configured to verify authenticity and integrity of the first diagnosis policy file. The processing unit 1830 is further configured to: when verification on the authenticity and integrity of the first diagnosis policy file succeeds, verify, based on the access control policy information, whether a diagnosis command has an access control permission.

In a possible implementation, the access control policy information includes a validity period. The processing unit 1830 is specifically configured to: within the validity period, verify, based on the access control policy information, whether the diagnosis command has the access control permission.

In a possible implementation, the access control policy information further includes first vehicle identity information. The processing unit 1830 is specifically configured to verify whether the first vehicle identity information is consistent with second vehicle identity information, where the diagnosis command includes the second vehicle identity information.

In a possible implementation, the first vehicle identity information and/or the second vehicle identity information are/is a vehicle identification number.

In a possible implementation, the access control policy information further includes a first identifier ID. The first identifier ID includes at least one of a first electronic control unit ID, a first CAN ID, a first diagnosis service ID, and a first diagnosis data ID. The processing unit 1830 is specifically configured to verify whether the first identifier ID is consistent with a second identifier ID. The second identifier ID is an identifier ID in the diagnosis command, and the second identifier ID includes at least one of a second electronic control unit ID, a second CAN ID, a second diagnosis service ID, and a second diagnosis data ID.

In a possible implementation, the access control policy information further includes a first timestamp. The processing unit 1830 is specifically configured to verify whether a second timestamp is greater than the first timestamp. The second timestamp is a timestamp of the diagnosis command.

In a possible implementation, the diagnosis device includes the local diagnosis instrument, and the first diagnosis policy file includes a first key. The processing unit 1830 is further configured to store the first key in a vehicle, where the vehicle is a vehicle that is to execute the diagnosis command. The processing unit 1830 is further configured to verify whether the first key is consistent with a second key, where the second key is a key stored in the local diagnosis instrument. The processing unit 1830 is further configured to establish a secure access service with the local diagnosis instrument when the first key is consistent with the second key.

In a possible implementation, the diagnosis device includes the local diagnosis instrument. The transceiver unit 1810 is further configured to receive a first key sent by the local diagnosis instrument. The processing unit 1830 is further configured to store the first key in a vehicle, where the vehicle is a vehicle that is to execute the diagnosis command. The processing unit 1830 is further configured to verify whether the first key is consistent with a second key, where the second key is a key stored in the local diagnosis instrument. The processing unit 1830 is further configured to establish a secure access service with the local diagnosis instrument when the first key is consistent with the second key.

In a possible implementation, the processing unit 1830 is specifically configured to establish the secure access service with the local diagnosis instrument when the first key is consistent with the second key and the first key is within a validity period.

In a possible implementation, the access control policy information further includes a certificate and a signature. The processing unit 1830 is specifically configured to: decrypt the signature by using a public key of the certificate, to obtain a first digital digest; perform hash calculation on the access control policy information, to obtain a second digital digest; and verify whether the first digital digest is consistent with the second digital digest.

In a possible implementation, the processing unit 1830 is specifically configured to verify whether the first vehicle identity information matches a vehicle, where the vehicle is a vehicle that is to execute the diagnosis command.

In a possible implementation, the transceiver unit 1810 is further configured to receive a second diagnosis policy file sent by the diagnosis device, where the second diagnosis file includes a third timestamp. The processing unit 1830 is specifically configured to verify whether the first timestamp is greater than the third timestamp.

In a possible implementation, the transceiver unit 1810 is specifically configured to: when authorization of a vehicle owner is obtained, receive the first diagnosis policy file sent by the diagnosis device.

In a design, the apparatus 1800 may be configured to perform actions performed by the diagnosis device in the foregoing method embodiments.

The apparatus 1800 includes a transceiver unit 1810, configured to send first request information to an authorization management system, where the first request information is used to request the authorization management system to generate a first diagnosis policy file, and the first diagnosis policy file is used to verify whether a diagnosis command has an access control permission. The transceiver unit 1810 is further configured to receive the first diagnosis policy file sent by the authorization management system. The transceiver unit 1810 is further configured to send the first diagnosis policy file to a vehicle, where the vehicle is a vehicle that is to execute the diagnosis command.

In a possible implementation, the apparatus further includes an obtaining unit 1820, configured to obtain identity information of a diagnostic person. The transceiver unit 1810 is further configured to send the identity information of the diagnostic person to the authorization management system. The transceiver unit 1810 is specifically configured to send the first request information to the authorization management system when receiving first response information sent by the authorization management system, where the first response information indicates that identity verification of the diagnostic person succeeds.

In a possible implementation, the first diagnosis policy file includes a second key. The apparatus further includes a processing unit 1830, configured to store the second key in the diagnosis device.

In a possible implementation, the transceiver unit 1810 is further configured to receive a second key sent by a key management system. The processing unit 1830 is further configured to: store the second key in the diagnosis device, where the diagnosis device is a local diagnosis instrument; and send a first key to the vehicle.

In a design, the apparatus 1800 may be configured to perform actions performed by the authorization management system in the foregoing method embodiments.

The apparatus 1800 includes: a transceiver unit 1810, configured to receive first request information sent by a diagnosis device; and a processing unit 1830, configured to generate a first diagnosis policy file based on the first request information, where the first diagnosis policy file is used to verify whether a diagnosis command has an access control permission. The transceiver unit 1810 is further configured to send the first diagnosis policy file to the diagnosis device.

In a possible implementation, the transceiver unit 1810 is further configured to receive identity information of a diagnostic person sent by the diagnosis device. The transceiver unit 1810 is further configured to send first response information to the diagnosis device when the identity information of the diagnostic person is consistent with identity information preset in an authorization management system, where the first response information indicates that identity verification of the diagnostic person succeeds.

It should be understood that the transceiver unit provided in embodiments of this application may be a communication interface on a diagnosis module (diagnosis apparatus), and the diagnosis module may receive the first diagnosis policy file from a T-BOX or another device through the interface. Alternatively, the transceiver unit may be a communication interface on a T-Box in the vehicle. The T-Box receives the first diagnosis policy file, and sends the first diagnosis policy file to a diagnosis module for processing.

It should be further understood that the processing unit 1830 in FIG. 18 may be implemented by at least one processor or a processor-related circuit, the obtaining unit 1820 and the transceiver unit 1810 may be implemented by a transceiver or a transceiver-related circuit, and the storage unit may be implemented by at least one memory.

Optionally, if the apparatus 1800 is located in the vehicle 200, the processing unit 1830 may be the processor 211 shown in FIG. 2.

Optionally, the processing unit 1830 may be a processor 1920 in FIG. 19, the storage unit may be a memory 1910 in FIG. 19, and the obtaining unit 1810 or the obtaining unit 1820 may be a communication interface 1930 in FIG. 19.

FIG. 19 is a schematic diagram of a diagnosis apparatus 1900 according to an embodiment of this application. The apparatus 1900 may be applied to the vehicle 100 in FIG. 1(a) and FIG. 1(b).

The diagnosis apparatus 1900 includes a memory 1910, a processor 1920, and a communication interface 1930. The memory 1910, the processor 1920, and the communication interface 1930 are connected by using an internal connection path. The memory 1910 is configured to store instructions. The processor 1920 is configured to execute the instructions stored in the memory 1910. Optionally, the memory 1910 may be coupled to the processor 1920 through an interface, or may be integrated with the processor 1920.

It should be noted that the communication interface 1930 implements communication between the communication device 1000 and another device or a communication network by using, for example but not limited to, a transceiver apparatus like a transceiver. The communication interface 1930 may further include an input/output interface (input/output interface).

The processor 1920 stores one or more computer programs, and the one or more computer programs include instructions. When the instructions are run by the processor 1920, the diagnosis apparatus 1900 is enabled to perform the technical solutions of the diagnosis methods in the foregoing embodiments.

Optionally, the apparatus 1800 and the apparatus 1900 may be located in the vehicle 200 in FIG. 2.

Optionally, the apparatus 1800 and the apparatus 1900 may be the computing platform 210 in the vehicle in FIG. 2.

In an implementation process, steps in the foregoing methods can be implemented by using a hardware integrated logic circuit in the processor 1920, or by using instructions in a form of software. The method of the communication disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory 1910, and the processor 1920 reads information in the memory 1910, and completes the steps in the foregoing methods in combination with hardware of the processor. To avoid repetition, details are not described herein again.

An embodiment of this application further provides a computer-readable medium, where the computer-readable medium stores program code. When the computer program code is run on a computer, the computer is enabled to perform any one of the methods in FIG. 3 to FIG. 17.

An embodiment of this application further provides a computer program product. The computer program product includes a computer program. When the computer program is run, a computer is enabled to perform any one of the methods in FIG. 3 to FIG. 17.

An embodiment of this application further provides a chip, including at least one processor and a memory. The at least one processor is coupled to the memory, and is configured to read and execute instructions in the memory, to perform any one of the methods in FIG. 3 to FIG. 17.

An embodiment of this application further provides a vehicle, including at least one processor and a memory. The at least one processor is coupled to the memory, and is configured to read and execute instructions in the memory, to perform any one of the methods in FIG. 3 to FIG. 17.

An embodiment of this application further provides a vehicle, including the diagnosis apparatus in FIG. 18 or FIG. 19.

It should be understood that, the processor in embodiments of this application may be a central control unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It should also be understood that in embodiments of this application, the memory may include a read-only memory and a random access memory, and provide an instruction and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Terms such as "component" and "module" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A diagnosis method, wherein the method comprises:
receiving a first diagnosis policy file sent by a diagnosis device, wherein the first diagnosis policy file comprises access control policy information, and the diagnosis device comprises a remote diagnosis platform or a local diagnosis instrument;
verifying authenticity and integrity of the first diagnosis policy file; and
when the verification on the authenticity and integrity of the first diagnosis policy file succeeds, verifying, based on the access control policy information, whether a diagnosis command has an access control permission.

2. The method according to claim 1, wherein the access control policy information comprises a validity period, and the verifying, based on the access control policy information, whether a diagnosis command has an access control permission comprises:
within the validity period, verifying, based on the access control policy information, whether the diagnosis command has the access control permission.

3. The method according to claim 1 or 2, wherein the access control policy information further comprises first vehicle identity information, and the verifying, based on the access control policy information, whether a diagnosis command has an access control permission comprises:
verifying whether the first vehicle identity information is consistent with second vehicle identity information, wherein the diagnosis command comprises the second vehicle identity information.

4. The method according to claim 3, wherein the first vehicle identity information and/or the second vehicle identity information are/is a vehicle identification number.

5. The method according to claims 1 to 4, wherein the access control policy information further comprises a first identifier ID, and the first identifier ID comprises at least one of a first electronic control unit ID, a first CAN ID, a first diagnosis service ID, and a first diagnosis data ID; and
the verifying, based on the access control policy information, whether a diagnosis command has an access control permission comprises:
verifying whether the first identifier ID is consistent with a second identifier ID, wherein the second identifier ID is an identifier ID in the diagnosis command, and the second identifier ID comprises at least one of a second electronic control unit ID, a second CAN ID, a second diagnosis service ID, and a second diagnosis data ID.

6. The method according to claims 1 to 5, wherein the access control policy information further comprises a first timestamp, and the verifying, based on the access control policy information, whether a diagnosis command has an access control permission comprises:
verifying whether a second timestamp is greater than the first timestamp, wherein the second timestamp is a timestamp of the diagnosis command.

7. The method according to claims 1 to 6, wherein the diagnosis device comprises the local diagnosis instrument, the first diagnosis policy file further comprises a first key, and the method further comprises:
storing the first key in a vehicle, wherein the vehicle is a vehicle that is to execute the diagnosis command;
verifying whether the first key is consistent with a second key, wherein the second key is a key stored in the local diagnosis instrument; and
establishing a secure access service with the local diagnosis instrument when the first key is consistent with the second key.

8. The method according to claims 1 to 6, wherein the diagnosis device comprises the local diagnosis instrument, and the method further comprises:
receiving a first key sent by the local diagnosis instrument;
storing the first key in a vehicle, wherein the vehicle is a vehicle that is to execute the diagnosis command;
verifying whether the first key is consistent with a second key, wherein the second key is a key stored in the local diagnosis instrument; and
establishing a secure access service with the local diagnosis instrument when the first key is consistent with the second key.

9. The method according to claim 7 or 8, wherein the establishing a secure access service with the local diagnosis instrument when the first key is consistent with the second key comprises:
establishing the secure access service with the local diagnosis instrument when the first key is consistent with the second key and the first key is within a validity period.

10. The method according to any one of claims 1 to 9, wherein the access control policy information further comprises a certificate and a signature, and the verifying authenticity and integrity of the first diagnosis policy file comprises:
decrypting the signature by using a public key of the certificate, to obtain a first digital digest;
performing hash calculation on the access control policy information, to obtain a second digital digest; and
verifying whether the first digital digest is consistent with the second digital digest.

11. The method according to claim 3, wherein the verifying authenticity and integrity of the first diagnosis policy file comprises:
verifying whether the first vehicle identity information matches a vehicle, wherein the vehicle is a vehicle that is to execute the diagnosis command.

12. The method according to claim 6, wherein before the receiving a first diagnosis policy file sent by a diagnosis device, the method further comprises:
receiving a second diagnosis policy file sent by the diagnosis device, wherein the second diagnosis file comprises a third timestamp; and
the verifying authenticity and integrity of the first diagnosis policy file comprises:
verifying whether the first timestamp is greater than the third timestamp.

13. The method according to claims 1 to 12, wherein the receiving a first diagnosis policy file sent by a diagnosis device comprises:
when authorization of a vehicle owner is obtained, receiving the first diagnosis policy file sent by the diagnosis device.

14. A diagnosis method, wherein the method is applied to a diagnosis device, the diagnosis device comprises a remote diagnosis platform or a local diagnosis instrument, and the method comprises:
sending first request information to an authorization management system, wherein the first request information is used to request the authorization management system to generate a first diagnosis policy file, and the first diagnosis policy file is used to verify whether a diagnosis command has an access control permission;
receiving the first diagnosis policy file sent by the authorization management system; and
sending the first diagnosis policy file to a vehicle, wherein the vehicle is a vehicle that is to execute the diagnosis command.

15. The method according to claim 14, wherein before the sending first request information to an authorization management system, the method further comprises:
obtaining identity information of a diagnostic person;
sending the identity information of the diagnostic person to the authorization management system; and
the sending first request information to an authorization management system comprises:
sending the first request information to the authorization management system when first response information sent by the authorization management system is received, wherein the first response information indicates that identity verification of the diagnostic person succeeds.

16. The method according to claim 14 or 15, wherein the first diagnosis policy file comprises a second key, and before the sending the first diagnosis policy file to a vehicle, the method further comprises:
storing the second key in the diagnosis device, wherein the diagnosis device is the local diagnosis instrument.

17. The method according to claim 14 or 15, wherein before the sending the first diagnosis policy file to a vehicle, the method further comprises:
receiving a second key sent by a key management system;
storing the second key in the diagnosis device, wherein the diagnosis device is the local diagnosis instrument; and
sending a first key to the vehicle.

18. A diagnosis method, wherein the method is applied to an authorization management system, and the method comprises:
receiving first request information sent by a diagnosis device, wherein the diagnosis device comprises a remote diagnosis platform or a local diagnosis instrument;
generating a first diagnosis policy file based on the first request information, wherein the first diagnosis policy file is used to verify whether a diagnosis command has an access control permission; and
sending the first diagnosis policy file to the diagnosis device.

19. The method according to claim 18, wherein before the receiving first request information sent by a diagnosis device, the method further comprises:
receiving identity information of a diagnostic person sent by the diagnosis device; and
sending first response information to the diagnosis device when the identity information of the diagnostic person is consistent with identity information preset in the authorization management system, wherein the first response information indicates that identity verification of the diagnostic person succeeds.

20. A diagnosis apparatus, wherein the apparatus comprises:
a transceiver unit, configured to receive a first diagnosis policy file sent by a diagnosis device, wherein the first diagnosis policy file comprises access control policy information, and the diagnosis device comprises a remote diagnosis platform or a local diagnosis instrument; and
a processing unit, configured to verify authenticity and integrity of the first diagnosis policy file, wherein
the processing unit is further configured to: when the verification on the authenticity and integrity of the first diagnosis policy file succeeds, verify, based on the access control policy information, whether a diagnosis command has an access control permission.

21. The apparatus according to claim 20, wherein the access control policy information comprises a validity period; and
the processing unit is specifically configured to: within the validity period, verify, based on the access control policy information, whether the diagnosis command has the access control permission.

22. The apparatus according to claim 20 or 21, wherein the access control policy information further comprises first vehicle identity information; and
the processing unit is specifically configured to verify whether the first vehicle identity information is consistent with second vehicle identity information, wherein the diagnosis command comprises the second vehicle identity information.

23. The apparatus according to claim 22, wherein the first vehicle identity information and/or the second vehicle identity information are/is a vehicle identification number.

24. The apparatus according to any one of claims 20 to 23, wherein the access control policy information further comprises a first identifier ID, and the first identifier ID comprises at least one of a first electronic control unit ID, a first CAN ID, a first diagnosis service ID, and a first diagnosis data ID; and
the processing unit is specifically configured to verify whether the first identifier ID is consistent with a second identifier ID, wherein the second identifier ID is an identifier ID in the diagnosis command, and the second identifier ID comprises at least one of a second electronic control unit ID, a second CAN ID, a second diagnosis service ID, and a second diagnosis data ID.

25. The apparatus according to any one of claims 20 to 24, wherein the access control policy information further comprises a first timestamp; and
the processing unit is specifically configured to verify whether a second timestamp is greater than the first timestamp, wherein the second timestamp is a timestamp of the diagnosis command.

26. The apparatus according to any one of claims 20 to 25, wherein the diagnosis device comprises the local diagnosis instrument, and the first diagnosis policy file comprises a first key;
the processing unit is further configured to store the first key in a vehicle, wherein the vehicle is a vehicle that is to execute the diagnosis command;
the processing unit is further configured to verify whether the first key is consistent with a second key, wherein the second key is a key stored in the local diagnosis instrument; and
the processing unit is further configured to establish a secure access service with the local diagnosis instrument when the first key is consistent with the second key.

27. The apparatus according to any one of claims 20 to 25, wherein the diagnosis device comprises the local diagnosis instrument;
the transceiver unit is further configured to receive a first key sent by the local diagnosis instrument;
the processing unit is further configured to store the first key in a vehicle, wherein the vehicle is a vehicle that is to execute the diagnosis command;
the processing unit is further configured to verify whether the first key is consistent with a second key, wherein the second key is a key stored in the local diagnosis instrument; and
the processing unit is further configured to establish a secure access service with the local diagnosis instrument when the first key is consistent with the second key.

28. The apparatus according to claim 26 or 27, wherein
the processing unit is specifically configured to establish the secure access service with the local diagnosis instrument when the first key is consistent with the second key and the first key is within a validity period.

29. The apparatus according to any one of claims 20 to 28, wherein the access control policy information further comprises a certificate and a signature; and
the processing unit is specifically configured to: decrypt the signature by using a public key of the certificate, to obtain a first digital digest;
perform hash calculation on the access control policy information, to obtain a second digital digest; and
verify whether the first digital digest is consistent with the second digital digest.

30. The apparatus according to claim 22, wherein
the processing unit is specifically configured to verify whether the first vehicle identity information matches a vehicle, wherein the vehicle is a vehicle that is to execute the diagnosis command.

31. The apparatus according to claim 25, wherein
the transceiver unit is further configured to receive a second diagnosis policy file sent by the diagnosis device, wherein the second diagnosis file comprises a third timestamp; and
the processing unit is specifically configured to verify whether the first timestamp is greater than the third timestamp.

32. The apparatus according to any one of claims 20 to 31, wherein
the transceiver unit is specifically configured to: when authorization of a vehicle owner is obtained, receive the first diagnosis policy file sent by the diagnosis device.

33. A diagnosis apparatus, wherein the apparatus comprises:
a transceiver unit, configured to send first request information to an authorization management system, wherein the first request information is used to request the authorization management system to generate a first diagnosis policy file, and the first diagnosis policy file is used to verify whether a diagnosis command has an access control permission, wherein
the transceiver unit is further configured to receive the first diagnosis policy file sent by the authorization management system; and
the transceiver unit is further configured to send the first diagnosis policy file to a vehicle, wherein the vehicle is a vehicle that is to execute the diagnosis command.

34. The apparatus according to claim 33, wherein the apparatus further comprises:
an obtaining unit, configured to obtain identity information of a diagnostic person, wherein
the transceiver unit is further configured to send the identity information of the diagnostic person to the authorization management system; and
the transceiver unit is specifically configured to send the first request information to the authorization management system when first response information sent by the authorization management system is received, wherein the first response information indicates that identity verification of the diagnostic person succeeds.

35. The apparatus according to claim 33 or 34, wherein the first diagnosis policy file comprises a second key, and the apparatus further comprises:
a processing unit, configured to store the second key in a diagnosis device.

36. The apparatus according to claim 33 or 34, wherein
the transceiver unit is further configured to receive a second key sent by a key management system; and
the processing unit is further configured to: store the second key in the diagnosis device, wherein the diagnosis device is a local diagnosis instrument; and
send a first key to the vehicle.

37. A diagnosis apparatus, wherein the apparatus comprises:
a transceiver unit, configured to receive first request information sent by a diagnosis device; and
a processing unit, configured to generate a first diagnosis policy file based on the first request information, wherein the first diagnosis policy file is used to verify whether a diagnosis command has an access control permission, wherein
the transceiver unit is further configured to send the first diagnosis policy file to the diagnosis device.

38. The apparatus according to claim 37, wherein
the transceiver unit is further configured to receive identity information of a diagnostic person sent by the diagnosis device; and
the transceiver unit is further configured to send first response information to the diagnosis device when the identity information of the diagnostic person is consistent with identity information preset in an authorization management system, wherein the first response information indicates that identity verification of the diagnostic person succeeds.

39. A diagnosis apparatus, comprising at least one processor and a memory, wherein the at least one processor is coupled to the memory, and is configured to read and execute instructions in the memory, to perform the method according to any one of claims 1 to 19.

40. A computer-readable medium, wherein the computer-readable medium stores program code, and when the computer program code is run on a computer, the computer is enabled to perform the method according to any one of claims 1 to 19.

41. A chip, comprising at least one processor and a memory, wherein the at least one processor is coupled to the memory, and is configured to read and execute instructions in the memory, to perform the method according to any one of claims 1 to 19.

42. A computer program product, wherein the computer product comprises a computer program, and when the computer program is run, a computer is enabled to perform the method according to any one of claims 1 to 19.

43. A vehicle, comprising at least one processor and a memory, wherein the at least one processor is coupled to the memory, and is configured to read and execute instructions in the memory, to perform the method according to any one of claims 1 to 13.
